# EUROPEAN PATENT APPLICATION

(11) **EP 3 960 961 A1**
(43) Date of publication of application: **02.03.2022**
(21) Application number: 20794811.8
(22) Date of filing: 26.04.2020
(51) Int. Cl.: E04F 21/08, B05B 13/04, B25J 11/00

(54) **SPRAYING ROBOT, CONTROL METHOD, AND COMPUTER READABLE STORAGE MEDIUM**

(30) Priority: 26.04.2019 CN 201910344622; 21.05.2019 CN 201910426163; 21.05.2019 CN 201910425564; 21.05.2019 CN 201920733311 U; 21.05.2019 CN 201920732509 U; 21.05.2019 CN 201920732520 U; 24.10.2019 CN 201911019423; 25.03.2020 CN 202010217382
(71) Applicant: Guangdong Bright Dream Robotics Co., Ltd., Foshan, Guangdong 528311 (CN)
(72) Inventor: XU, Anpeng, Foshan, Guangdong 528311 (CN); XU, Huifang, Foshan, Guangdong 528311 (CN); JI, Ruinan, Foshan, Guangdong 528311 (CN); LI, Lue, Foshan, Guangdong 528311 (CN)
(74) Representative: Arnold & Siedsma
(86) International application number: PCT/CN2020/087069
(87) International publication number: WO 2020/216382

(57) **Abstract**

A spraying robot, a control method, and a computer readable storage medium. The spraying robot (100) comprises a frame body (1), a first lifting mechanism (2), a lifting motor (3), and a spraying gun (4); a lifting channel (12) is provided inside the frame body (1); the first lifting mechanism (2) is provided inside the lifting channel (12); a first portion of the first lifting mechanism (2) is fixedly connected to the frame body (1); the lifting motor (3) is connected to the first lifting mechanism (2) in a transmission manner, so that under the driving of the lifting motor (3), the first lifting mechanism (2) moves in the lifting channel (12); the spraying gun (4) is provided in a second portion of the first lifting mechanism (2); wherein the first portion and the second portion are provided on both sides of the first lifting mechanism (2).

## Description

### CROSS REFERENCE TO RELATED APPLICATION

The present application claims priority to Chinese Patent Applications with No. 202010217382.9 filed on March 25, 2020, No. 201911019423.7 filed on October 24, 2019, Nos. 201910426163,9, 201910425564.2, 201920733311.7, 201920732509.3 and 201920732520.X which are filed on May 21, 2019, and No. 201910344622.9 filed on April 26, 2019, contents of which are expressly incorporated herein by reference in their entirety.

### TECHNICAL FIELD

The present invention relates to the field of construction machinery technology, and particularly to a spraying robot, a control method, and a computer readable storage medium.

### BACKGROUND

In the existing construction industry, the paint brushing is generally manual roll coating or spraying. There are also some devices that can realize semi-automatic spraying. However, the semi-automatic device has a simple structure and a single function, for example, the spraying system is separated from the device, which makes the device unable to move autonomously, accordingly the spraying is not flexible, the precision and automation are not high, and the device has a strong dependence on manual labor.

### SUMMARY

The present invention aims to solve at least one of the technical problems existing in the prior art. For this reason, one purpose of the present invention is to provide a spraying robot, which can increase its spraying range and has higher flexibility during spraying operations, thereby improving the spraying efficiency and spraying effect of the spraying robot.

The invention also provides a control method for the spraying robot.

The invention also provides a computer-readable storage medium for the control method of the spraying robot.

In the first aspect of the present invention, a spraying robot is provided, which includes: a support body, a lifting channel being provided in the support body; a first lifting mechanism, provided in the lifting channel, a first portion of the first lifting mechanism being fixedly connected to the support body; a lifting motor, being in transmission connection with the first lifting mechanism to move the first lifting mechanism in the lifting channel under driving of the lifting motor; a spray gun, provided on a second portion of the first lifting mechanism, wherein the first portion and the second portion are respectively provided on both sides of the first lifting mechanism to make the first lifting mechanism extend from or retract into the lifting channel under the driving of the lifting motor, and the spray gun moves relative to the first lifting mechanism.

Therefore, by provided the first lifting mechanism in the lifting channel, the structure of the spraying robot can be made compact, and the first lifting mechanism can move in the lifting channel, that is, the first lifting mechanism can extend from or retract into the lifting channel, thereby expanding the operating range of the spraying robot. Through the transmission connection of the lifting motor and the first lifting mechanism, the lifting motor can drive the first lifting mechanism to move in the lifting channel, thereby improving the automation level of the product and reducing the dependence on labors. By fixing the first portion of the first lifting mechanism to the support body, the range of movement of the first lifting mechanism can be limited, to prevent the first lifting mechanism from falling out of the lifting channel, thereby ensuring the stability and reliability of the operation of the first lifting mechanism. The spray gun is provided at the second portion of the first lifting mechanism. The second portion and the first portion of the first lifting mechanism are respectively provided on both sides of the first lifting mechanism, so that the second portion can move relative to the first portion, which improves the operating range of the spray gun, and further improves the degree of automation of the spraying robot.

In addition, the spraying robot according to the present invention may also have the following additional technical features.

In some embodiments, the first lifting mechanism includes: at least two transmission wheels, one of the at least two transmission wheels is in transmission connection with the lifting motor; a transmission belt, wound around the transmission wheel in transmission connection with the lifting motor, the transmission belt is matched with the at least two transmission wheels to move under the driving of the lifting motor.

Optionally, one side of the support body is provided with a fixed plate extending upward and parallel to a direction of the lifting channel, a first portion of the transmission belt is fixedly connected to the fixed plate, the spray gun is provided on a second portion on a side of the transmission belt away from the fixed plate.

Furthermore, the transmission wheel is a gear, and the transmission belt is a rack; or the transmission wheel is a belt wheel, and the transmission belt is a synchronous belt; or the transmission wheel is a chain wheel, and the transmission belt is a chain belt.

In some embodiments, the spraying robot further includes: a hanger, provided on the second portion of the first lifting mechanism, and provided with a first sliding assembly, the spray gun being provided on the first sliding assembly to slide under an action of the first sliding assembly.

Optionally, the first sliding assembly includes: a first guide rail, fixedly connected to the hanger; a first guide block, provided in the first guide rail, and provided with the spray gun; a sliding motor, electrically connected to the first guide block to control the first guide block to slide on the first guide rail.

Optionally, the spraying robot further includes: a rotating assembly, provided on the first sliding assembly, the spray gun being provided on the rotating assembly to rotate within an operating surface of the spray gun under the action of the rotating assembly.

In some embodiments, the spraying robot further includes: a second lifting mechanism, provided on the support body, the second lifting mechanism being capable of moving relative to the support body; the second lifting mechanism is provided with the lifting channel.

Optionally, the second lifting mechanism includes: a second guide rail and a second guide block slidably connected to each other, the second guide block is provided with the lifting channel.

In some embodiments, the spraying robot further includes: a material barrel, provided within the support body, a communicating conveying pipeline is provided between the spray gun and the material barrel; and/or a moving device, provided at a bottom portion of the support body to drive the support body to move; and/or a power supply device, provided within the support body to provide an electrical energy when the spraying robot operates.

In some embodiments, the transmission belt is provided with a first matching portion fixedly connected to the support body, and the first lifting mechanism moves relative to the support body through the first matching portion under driving of the lifting motor.

Optionally, the first matching portion is provided on a side of the transmission belt, the spray gun of the spraying robot is provided on the other side of the transmission belt to move on the transmission belt under the driving of the lifting motor, and the first lifting mechanism moves relative to the support body.

Optionally, the spraying robot further includes: a second matching portion provided on the support body, at least a part of the transmission belt is provided in the second matching portion, to fixedly connect the transmission belt with the support body through matching of the first matching portion and the second matching portion.

Furthermore, one of the first matching portion and the second matching portion is a tooth groove adapted to a shape of a wheel tooth of the transmission wheel, and the other is a convex tooth with a same shape as the wheel tooth, to fixedly connect the transmission belt with the support body through matching of the tooth groove and the convex tooth; or the second matching portion is provided with a tooth-shape block protruding toward the transmission belt to fix the first matching portion through the tooth-shape block.

In some embodiments, the first lifting mechanism further includes: an elevating support slidably connected to the support body in a height direction; the transmission wheel in transmission connection with the lifting motor is a driving wheel, and the driving wheel is mounted at one end of the elevating support in the height direction; the other transmission wheel is a driven wheel, and the driven wheel is mounted at the other end of the elevating support in the height direction; the transmission belt is wound around peripheries of the driving wheel and the driven wheel, the first portion of the transmission belt is located on a side of a central connection line of the driving wheel and the driven wheel, and the second portion of the transmission belt is located on the other side of the central connection line of the driving wheel and the driven wheel, the first portion is fixedly connected to the support body, and the second portion is configured to mount the spray gun; when the spray gun is at the highest operating position, the second portion is located at an upper portion of the first lifting mechanism, and the first portion is located at a lower portion of the first lifting mechanism.

Optionally, the spraying robot further includes a first connector and a second connector, one end of the first connector is fixedly connected to the second portion, and the other end of the first connector is connected to the spray gun, one end of the second connector is fixedly connected to the first portion, and the other end of the second connector is connected to the support body.

Optionally, the first connector includes: a connector main board, one side of the connector main board being connected to the second portion, and the other side of the connector main board being connected to the spray gun; a connector side plate, both ends of the connector main board being provided with the connector side plate, and two connector side plates being respectively slidably connected to the elevating support.

In some embodiments, the elevating support includes two vertical walls and two reinforcing walls, upper ends of the two vertical walls are connected by the reinforcing wall and lower ends of the two vertical walls are connected by the reinforcing wall, two sides of the two vertical walls adjacent to each other in a horizontal direction are respectively provided with relief openings, the first connector passes through one relief opening, and the second connector passes through the other relief opening; .

Optionally, the first lifting mechanism further includes a first upper limit member and a first lower limit member, the first upper limit member is provided on an upper portion of the elevating support and is configured to limit a high position of the second portion, the first lower limit member is provided at a lower portion of the elevating support and is configured to limit a low position of the second portion; and/or, the first lifting mechanism further includes a second upper limit member and a second lower limit member, the second upper limit member is provided on the upper portion of the support body and is configured to limit the high position of the elevating support, the second lower limit member is provided on the lower portion of the support body and is configured to limit the low position of the elevating support.

Optionally, second slide rails are provided on inner sides of both side walls of the support body, and second sliding blocks are provided on outer sides of the vertical walls on both sides of the elevating support, the second sliding blocks are located at the lower portion of the elevating support, and each second sliding block is slidably connected to each second slide rail.

In some embodiments, the spraying robot further includes: a rotating assembly provided on the support body, the rotating assembly includes a first rotating structure and a second rotating structure, the first rotating structure being provided on the support body, and the second rotating structure being provided on the first rotating structure, the second rotating structure and the first rotating structure rotating in different directions; the spray gun is provided on the second rotating structure to rotate under the driving of the rotating assembly.

Optionally, a rotating platform is provided at one end of the support body, and the first rotating structure includes: a first rotating base, provided on the rotating platform; a first rotating body, provided coaxially with the first rotating base, and the first rotating body being capable of rotating on the first rotating base; a first rotating motor, being in transmission connection with the first rotating body to rotate the first rotating body.

Optionally, the second rotating structure includes: a second rotating base, provided on the first rotating body; a second rotating body, provided coaxially with the second rotating base, and the second rotating body being capable of rotating relative to the second rotating base, and the spray gun being provided on the second rotating body; a second rotating motor, being in transmission connection with the second rotating body to rotate the second rotating body.

In some embodiments, the first rotating body includes a first plate and a second plate connected to a side of the first plate, the first plate is at a preset angle to the second plate, and the second rotating motor is provided in a space sandwiched by the first plate and the second plate.

Optionally, the spraying robot further includes: a right-angle speed reducer, one end of the right-angle speed reducer being connected to the second rotating motor, and the other end being connected to the second rotating body, to enable a right angle between an axis of the second rotating motor and an axis of the second rotating base.

Optionally, a rotating surface of the first rotating structure is perpendicular to a rotating surface of the second rotating structure.

In some embodiments, the spraying robot further includes: a rotating bracket, one end of the rotating bracket being connected to the support body, a wire passing space being provided within the rotating bracket, and the first rotating base being provided on the rotating bracket.

In some embodiments, the spraying robot further includes: a second sliding assembly provided on the support body, and the first rotating structure being provided on the second sliding assembly.

Optionally, the second sliding assembly includes: a lead screw provided on the support body; a bracket sliding block provided with threads matched with the lead screw, when the lead screw is driven by the sliding motor to rotate, the bracket sliding block is capable of moving along an axial direction of the lead screw, and the bracket sliding block is provided with the rotating assembly.

In some embodiments, the spraying robot further includes: a movable plate articulated with the rotating bracket, the spray gun being fixedly connected to the movable plate, and the spray gun being configured to perform a spraying operation; an electric push rod, one end of the electric push rod being articulated with the rotating bracket, the other end of the electric push rod being articulated with the movable plate, and both ends of the electric push rod being capable of performing a telescopic movement.

Optionally, the spraying robot further includes an elastic telescopic component, one end of the elastic telescopic component is articulated with the rotating bracket, and the other end of the elastic telescopic component is articulated with the movable plate; an elastic force of the elastic telescopic component is configured to offset at least a part of a gravity of the spray gun.

Optionally, a number of the elastic telescopic components is two; two elastic telescopic components are respectively located on both sides of a rotating surface, and the rotating surface is a plane where the electric push rod is located when rotating.

In some embodiments, the elastic telescopic component is a nitrogen gas spring; a first position is lower than a second position, the first position is a position where one end of the electric push rod is articulated with the rotating bracket, and the second position is a position where the other end of the electric push rod is articulated with the movable plate; a third position is lower than a fourth position, the third position is a position where one end of the nitrogen gas spring is articulated with the rotating bracket, and the fourth position is a position where the other end of the nitrogen gas spring is articulated with the movable plate; the nitrogen gas spring is in a compressed state, and a thrust provided by the nitrogen gas spring is configured to offset at least a part of the gravity of the spray gun.

Furthermore, the spraying robot further includes a limit device, the limit device is provided on the rotating bracket; the limit device includes an elastic abutment component, and the elastic abutment component is located above the movable plate; when the electric push rod acts on the movable plate to rotate the movable plate and the spray gun upward, the elastic abutment component abuts against the movable plate at a target rotation position, to apply a downward elastic force on the movable plate; the target rotation position is a position where the movable plate is located before the movable plate rotates upward to a preset position in place.

In some embodiments, the spraying robot further includes a location switch and a sensing chip, the location switch is provided on the rotating bracket, and the sensing chip is provided on the movable plate; when the movable plate and the spray gun rotate to preset positions in place under the thrust of the electric push rod, the location switch and the sensing chip trigger a sensing signal.

In some embodiments, the spraying robot further includes: a control device, provided on the support body and electrically connected to the first lifting mechanism and the spray gun to control elevating of the first lifting mechanism and spraying of the spray gun; a vision sensor, provided on the support body and configured to acquire a distance between a position of the support body and an obstacle, and the control device being electrically connected to the vision sensor to determine house type information of a space where the support body is located through the distance detected by the vision sensor; a moving device, provided at a bottom portion of the support body, and the control device being electrically connected to the moving device to control the moving device to move according to a spraying path corresponding to the house type information.

Optionally, the spraying robot further includes: a memory electrically connected to the control device, and pre-storing a plurality of house type images and spraying paths each of which corresponds to each house type image, so that the control device determines a house type image stored in the memory according to the house type information and determines a corresponding spraying path according to the house type image.

In some embodiments, the vision sensor specifically includes at least one of: a lidar sensor, an infrared sensor, and an ultrasonic sensor.

In the present invention, a control method for the above-mentioned spraying robot is further provided.

In the second aspect of the present invention, a control method includes: determining house type information of a position of the spraying robot by a vision sensor of the spraying robot; looking up a house type image corresponding to a house type structure; controlling the spraying robot to move according to a spraying path corresponding to the house type image.

Optionally, the control method further includes: when the spraying robot moves to any spraying position on the spraying path, controlling a moving device of the spraying robot to stop moving, and controlling, by a first lifting mechanism of the spraying robot, a spray gun of the spraying robot to move, and controlling the spray gun to spray; or during a movement of the spraying robot along the spraying path, controlling, by the first lifting mechanism of the spraying robot, the spray gun of the spraying robot to move, and controlling the spray gun to spray.

In some embodiments, the step of looking up the house type image corresponding to the house type structure specifically includes: respectively determining a matching degree between each house type image pre-stored in the memory and the house type information; determining a house type image in the plurality of house type images with the highest matching degree as the house type image corresponding to the house type structure.

Optionally, the control method further includes: before respectively determining the matching degree between each house type image pre-stored in the memory and the house type information, determining a usage state of a memory interface; determining whether there is a memory connected to the memory interface, and generating a determination result; if the determination result is yes, performing the step of respectively determining the matching degree between each house type image stored in an external memory and the house type information.

Accordingly, by controlling the spraying robot, when the spraying robot stops moving, because the support body is stationary relative to the ground, the spraying robot has a higher stability. Therefore, when the spray gun sprays, the spray gun is more stable and the accuracy of the spraying operation is improved. In addition, when the spraying robot moves along the spraying path, the first lifting mechanism of the spraying robot can also control the spray gun of the spraying robot to move, and control the spray gun to spray, so that the spraying robot can perform the spraying operation while moving to improve the efficiency of the spraying operation.

The invention further provides a computer-readable storage medium for the control method of the spraying robot in the above-mentioned embodiments.

In the third aspect of the present invention, a computer-readable storage medium is provided, on which a computer program is stored, steps of the control method for the spraying robot can be performed when the computer program is executed by a processor.

Therefore, by setting the control method in the computer, the spraying robot can walk along the designated path, and can also perform spraying operations as needed, so that the spraying efficiency and spraying effect of the spraying robot can be improved.

The additional aspects and advantages of the invention will be partially provided in the following description, and some will become obvious from the following description, or be understood through the practice of the invention.

### BRIEF DESCRIPTION OF THE DRAWINGS

The above and/or additional aspects and advantages of the present invention will become clear and easy to understand from the description of the embodiments in conjunction with the following accompanying drawings, in which:
FIG. 1 is a schematic structure diagram of a spraying robot from a perspective according to an embodiment of the present invention.
FIG. 2 is an exploded view of a spraying robot according to an embodiment of the present invention.
FIG. 3 is a schematic structure view of a spraying robot from another perspective according to an embodiment of the present invention.
FIG. 4 is an enlarged view of an area A in FIG. 3.
FIG. 5 is a schematic structure diagram of a first lifting mechanism of a spraying robot according to an embodiment of the present invention.
FIG. 6 is an enlarged view of an area B in FIG. 5.
FIG. 7 is a schematic structure diagram of a spraying robot with a part of the structure removed according to an embodiment of the present invention.
FIG. 8 is a schematic structure diagram of a spraying robot when a first lifting mechanism is in a high position according to an embodiment of the present invention.
FIG. 9 is a side view of a spraying robot when a first lifting mechanism is in a high position according to an embodiment of the present invention.
FIG. 10 is a cross-sectional view taken along a line C-C in FIG. 8.
FIG. 11 is an enlarged view of an area D in FIG. 10.
FIG. 12 is an enlarged view of an area E in FIG. 10.
FIG. 13 is a schematic structure diagram of a spraying robot when a first lifting mechanism is in a low position according to an embodiment of the present invention.
FIG. 14 is a side view of a spraying robot when a first lifting mechanism is in a low position according to an embodiment of the present invention.
FIG. 15 is a cross-sectional view taken along a line F-F in FIG. 13.
FIG. 16 is a schematic structure diagram of a spraying robot when a first lifting mechanism is in a middle position according to an embodiment of the present invention.
FIG. 17 is a side view of a spraying robot when a first lifting mechanism is in a middle position according to an embodiment of the present invention.
FIG. 18 is a cross-sectional view taken along a line G-G in FIG. 16.
FIG. 19 (a, b, c) is a comparison schematic diagram of a spraying robot when a first lifting mechanism is in different positions according to an embodiment of the present invention, in which FIG. a illustrates that a spray gun is in a high operation position, FIG. b illustrates that a spray gun is in a middle operation position, and FIG. c illustrates that a spray gun is in a low operation position.
FIG. 20 is a schematic structure diagram of a spraying robot according to an embodiment of the present invention.
FIG. 21 is a schematic structure diagram of a spraying robot according to another embodiment of the present invention.
FIG. 22 is a schematic structure diagram of a spraying robot according to another embodiment of the present invention.
FIG. 23 is a schematic structure diagram of a spraying robot according to another embodiment of the present invention.
FIG. 24 is a schematic structure diagram of a spraying method for a spraying robot according to an embodiment of the present invention.
FIG. 25 is a schematic diagram illustrating a part of a structure in FIG. 24.
FIG. 26 is an enlarged view of an area H in FIG. 25.
FIG. 27 is a flow chart showing a control method for a spraying robot according to an embodiment of the present invention.
FIG. 28 is a flow chart showing a control method for a spraying robot according to another embodiment of the present invention.
FIG. 29 is a flow chart showing a control method for a spraying robot according to another embodiment of the present invention.
FIG. 30 is a flow chart showing a control method for a spraying robot according to an embodiment of the present invention.

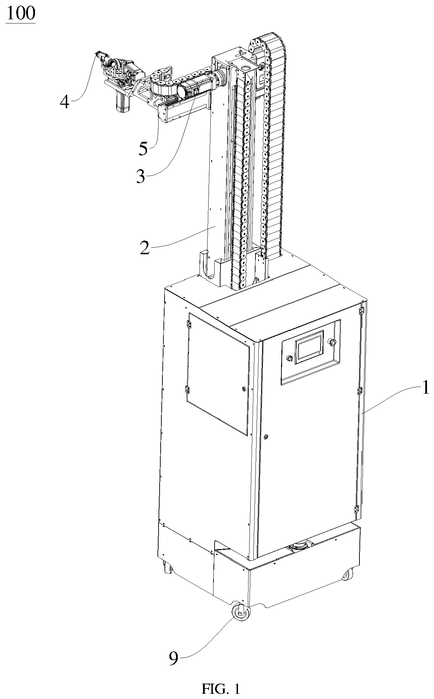

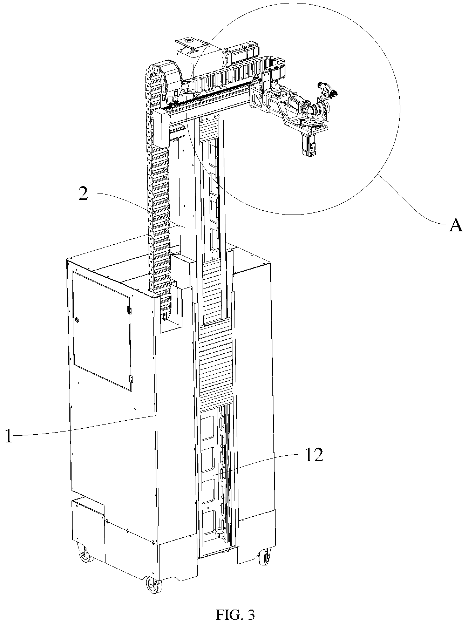

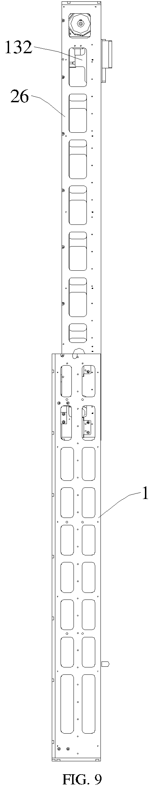

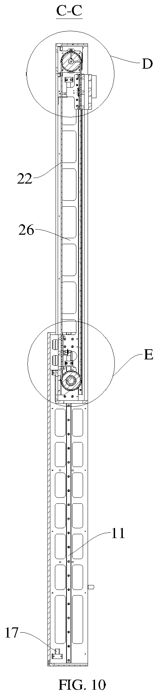

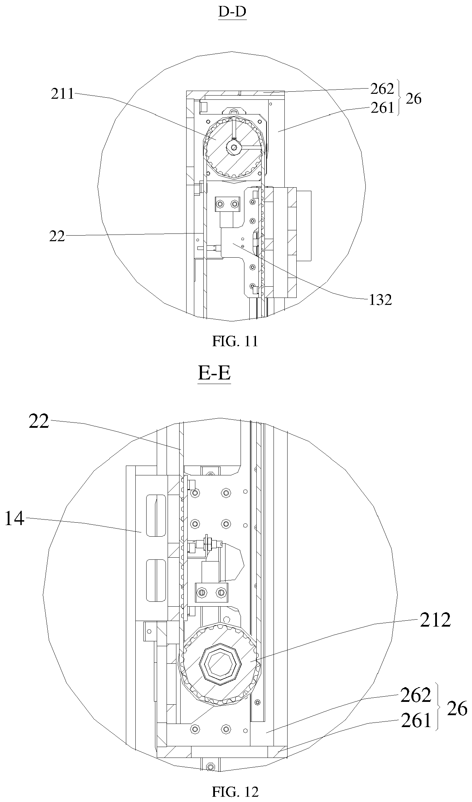

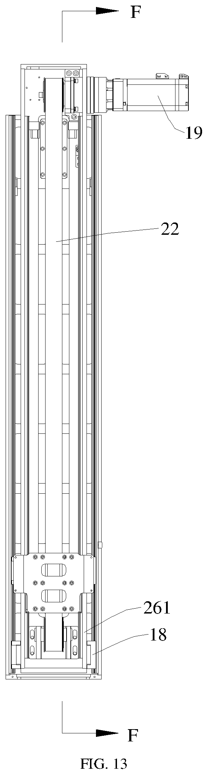

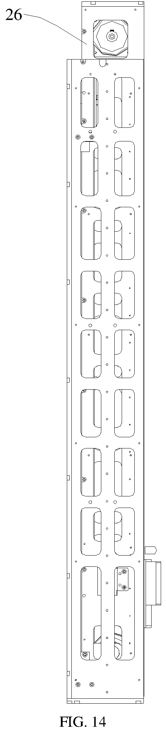

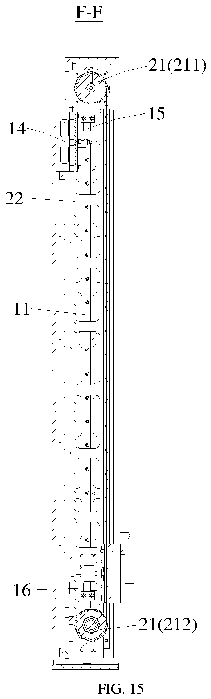

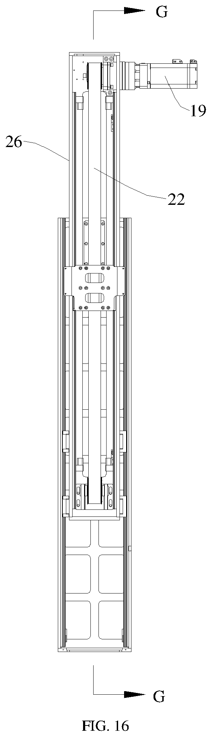

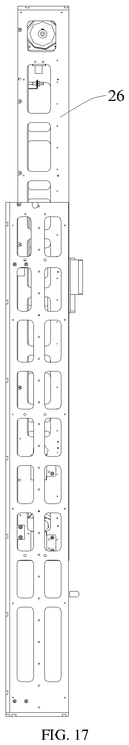

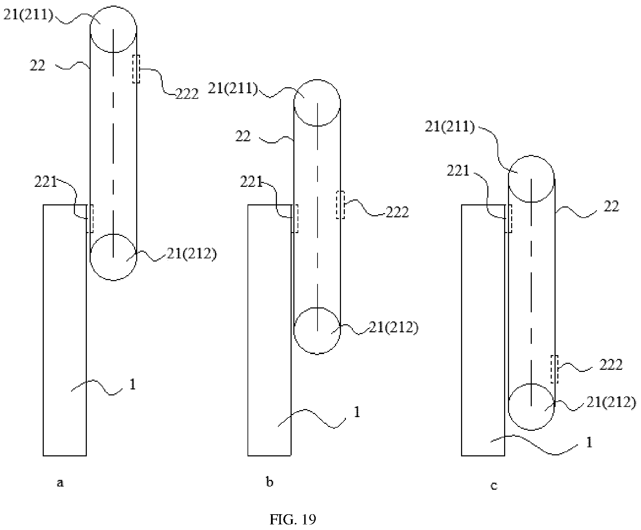

Correspondences between reference signs and components in FIGS. 1 to 30 are provided as follows:
100, spraying robot; 1, support body; 11, second slide rail; 111, fixed plate; 2, first lifting mechanism; 21, transmission wheel; 211, driving wheel; 212, driven wheel; 22, transmission belt, 221: first portion of transmission belt; 222, second portion of transmission belt; 23, first matching portion; 24, second matching portion; 25, tooth-shape block; 26, elevating support; 261, vertical wall; 262, reinforcing wall; 3, lifting motor; 4, spray gun; 5, hanger; 6, first sliding assembly; 61, first guide rail; 62, first guide block; 63, sliding motor; 7, rotating assembly; 71, first rotating structure; 711, first rotating base; 712, first rotating body; 7121, first plate; 7122, second plate; 713, first rotating motor; 72, second rotating structure; 721, second rotating base; 722, second rotating body; 723, second rotating motor; 73, rotating platform; 8, material barrel; 9, moving device; 10, power supply device; 12, lifting channel; 13, first connector; 131, connector main board; 132, connector side board; 14, second connector; 15, first upper limit member; 16, first lower limit member; 17, second lower limit member; 18, second sliding block; 19, drive motor; 20, rotating bracket; 30, second sliding assembly; 301, lead screw; 302, bracket sliding block; 303, sliding motor; 31, movable plate; 32, electric push rod; 33, nitrogen gas spring; 34, limit device; 35, location switch; 36, sensor chip; 37, vision sensor; 38, right-angle speed reducer; 39, moving component; 392, rotating shaft; 393, rotating blade; 41, compression spring; 42, limit guide shaft; 43, guide external member; 44, pressure plate; 45, first end 46: second end.

### DETAILED DESCRIPTION

In order to understand the above-mentioned aspects, features and advantages of the invention more clearly, the present invention will be further described in detail below in conjunction with the accompanying drawings and specific embodiments. It should be noted that the embodiments of the invention and features in the embodiments can be combined with each other if there is no contradiction.

In the following description, many specific details are set forth in order to fully understand the invention. However, the present invention can also be implemented in other ways different from those described herein. Therefore, the scope of protection of the invention is not limited by the specific embodiments provided below.

The spraying robot 100 will be described below with reference to FIGS. 1 to 30 according to an embodiment of the present invention.

As shown in FIGS. 1 to 30, the spraying robot 100 according to the embodiment of the present invention includes: a support body 1, a first lifting mechanism 2, a lifting motor 3 and a spray gun 4. Specifically, the support body 1 is provided with a lifting channel 12; the first lifting mechanism 2 is provided in the lifting channel 12; a first portion of the first lifting mechanism 2 is fixedly connected to the support body 1; and the lifting motor 3 is in transmission connection with the first lifting mechanism 2 so that the first lifting mechanism 2 moves in the lifting channel 12 under the driving of the lifting motor 3. The spray gun 4 is provided in a second portion of the first lifting mechanism 2; the first portion and the second portion are respectively provided on both sides of the first lifting mechanism 2, such that the first lifting mechanism 2 extends from or retracts into the lifting channel 12 under the driving of the lifting motor 3, and a relative movement occurs between the spray gun 4 and the first lifting mechanism 2.

In this embodiment, the spray gun 4 is provided at the second portion of the first lifting mechanism 2, so that the spray gun 4 can move relative to the first lifting mechanism 2, that is, a relative position of the spray gun 4 on the first lifting mechanism 2 can be changed. At the same time, the first lifting mechanism 2 can also extend from or retract into the lifting channel 12, so that the position of the spray gun 4 can be raised or lowered with the first lifting mechanism 2. When the first lifting mechanism 2 is lifted and lowered, the position of the spray gun 4 further changes relative to the first lifting mechanism 2, such as further lifting or moving horizontally, to expand the operating range of the spray gun 4, thereby increasing the spraying flexibility of the spraying robot 100 and the adaptability thereof to the construction environment. During the construction, the position of the spray gun 4 can be automatically adjusted according to the construction location, which improves the degree of automation of the product and reduces the dependence on labor.

Therefore, the first lifting mechanism 2 is provided in the lifting channel 12, which makes the structure of the spraying robot 100 compact, and accordingly the first lifting mechanism 2 can move in the lifting channel 12, that is, the first lifting mechanism 2 can extend from or retract into the lifting channel 12, thereby expanding the operating range of the spraying robot 100. Through the transmission connection of the lifting motor 3 and the first lifting mechanism 2, the lifting motor 3 can drive the first lifting mechanism 2 to move in the lifting channel 12, thereby improving the automation level of the product and reducing the dependence on labors. By fixing the first portion of the first lifting mechanism 2 to the support body 1, a movement range of the first lifting mechanism 2 can be limited in order to prevent the first lifting mechanism 2 from falling out of the lifting channel 12, thereby ensuring the operation stability and reliability of the first lifting mechanism 2. The spray gun 4 is provided in the second portion of the first lifting mechanism 2, and the second portion and the first portion of the first lifting mechanism 2 are respectively provided on both sides of the first lifting mechanism 2, so that the second portion can move relative to the first portion. The operating range of the spray gun 4 is increased, and the degree of automation of the spraying robot 100 is further improved.

It should be understood that the spray gun 4 can carry a paint itself, or can be connected to a container storing the paint through a pipeline, and draw the paint from the container for spraying.

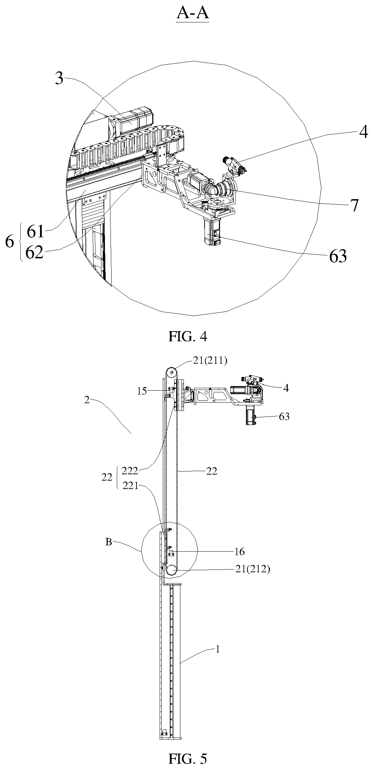

Optionally, as shown in FIG. 5, the first lifting mechanism 2 specifically includes: at least two transmission wheels 21 and a transmission belt 22; one of the at least two transmission wheels 21 is in transmission connection with the lifting motor 3. The transmission belt 22 is wound around the transmission wheel 21 which is in transmission connection with the lifting motor 3. The transmission belt 22 cooperates with at least two transmission wheels 21 to move under the driving of the lifting motor 3.

Therefore, through the cooperation of at least two transmission wheels 21 and the transmission belt 22, the transmission belt 22 is driven by the lifting motor 3 to move. Such a structure is simple and is beneficial for the transmission belt 22 to drive the spray gun 4 to move. One transmission wheel 21 is in transmission connection with the lifting motor 3, so that the transmission wheel 21 serves as a driving wheel 211 and transmits a torque of the lifting motor 3 to drive the transmission belt 22; and the other transmission wheel 21 serves as a driven wheel 212 to rotate with the movement of the transmission belt 22, which is convenient to provide tension to the transmission belt 22 and ensure the operation stability of the transmission belt 22.

Further, when the number of the transmission wheels 21 is two, the spray gun 4 rises in the direction of the support body 1 at twice the speed of the first lifting mechanism 2 under the action of the first lifting mechanism 2. In this way, the first lifting mechanism 2 has a two-stage lifting structure: the first lifting mechanism 2 is one stage of structure, and the conveyor belt is the other stage of structure. The length of the conveyor belt is a lifting height of the first lifting mechanism 2, that is, when the lifting height of the first lifting mechanism 2 is S, the lifting height of the spray gun 4 through the first lifting mechanism 2 is S.

Optionally, as shown in FIG. 5, one side of the support body 1 is provided with a fixed plate 111 extending upwardly and parallel to the direction of the lifting channel 12; the first portion 221 of the transmission belt is fixedly connected to the fixed plate 111; and the spray gun 4 is provided on the second portion on a side of the transmission belt 22 away from the fixed plate 111.

In this embodiment, by providing a fixed plate 111 on a side of the support body 1, the first portion 221 of the transmission belt is fixedly connected to the fixed plate 111, and the spray gun 4 is provided on the second portion on a side of the transmission belt 22 away from the fixed plate 111. As a result, the purposes that the transmission belt 22 moves in different directions and has two-stage lifting are achieved, that is, the purposes of lifting along the lifting channel 12 and two-stage lifting can be achieved. Specifically, when the transmission belt 22 moves downwards, since the first portion is fixed on the fixed plate 111, the transmission belt 22 moves downward as a whole, and the spray gun 4 can move downward as the overall position of the transmission belt 22 moves downward, and meanwhile can also move by itself on the transmission belt 22 relative to the first lifting mechanism 2, to move to the lower end of the transmission belt 22. When the transmission belt 22 moves upward, because the first portion is fixed on the fixed plate 111, the transmission belt 22 moves upward as a whole, and the spray gun 4 can move upward as the overall position of the transmission belt 22 moves upward, and meanwhile can move by itself on the transmission belt 22 relative to the first lifting mechanism 2, to move to the upper end of the transmission belt 22, to achieve the two-stage lifting, which greatly increases the operating range of the spray gun 4, improves the degree of automation of the product, and reduces the dependence on labors.

In some embodiments of the present invention, if the transmission wheel 21 is a gear and the transmission belt 22 is a rack; or the transmission wheel 21 is a belt wheel and the transmission belt 22 is a synchronous belt; or the transmission wheel 21 is a chain wheel and the transmission belt 22 is a chain belt.

In this embodiment, through the matching of the gear and the rack, or the matching of the belt wheel and the synchronous belt, or the matching of the chain wheel and the chain belt, such structure is simpler, the accessories are widely used and easy to produce and maintain, and the transmission process is stable and reliable, which is conducive to improving the product accuracy and automation degree. Specifically, the wheel has a compact structure, a high degree of meshing with the rack, and a low cost. The belt wheel and synchronous belt transmit smoothly with a little vibration. The elongation of the chain belt is low, a diameter of the chain wheel is small, and the load capacity is large.

In some embodiments of the present invention, the spraying robot 100 further includes: a hanger 5. The hanger 5 is provided on the second portion of the first lifting mechanism 2; and the hanger 5 is provided with a first sliding assembly 6; the spray gun 4 is provided on the first sliding assembly 6 to slide under the action of the first sliding assembly 6.

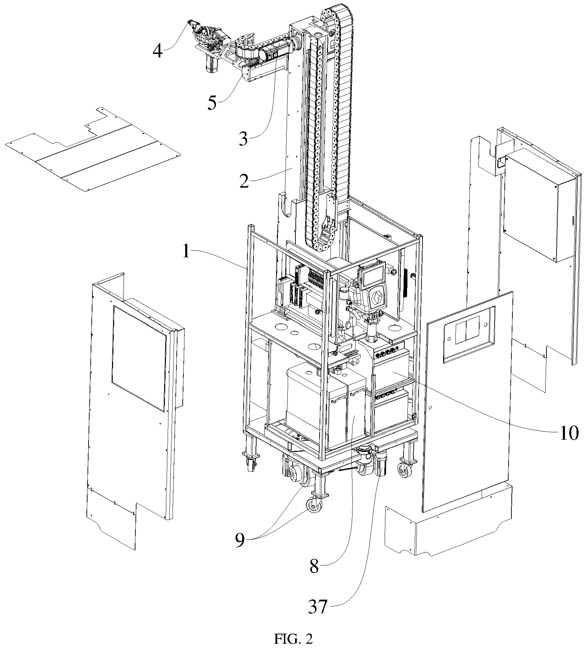

For example, as shown in FIG. 2, by providing the hanger 5 on the first lifting mechanism 2 and a first sliding assembly 6 on the hanger 5, the spray gun 4 is provided on the first sliding assembly 6, so that the spray gun 4 can slide, accordingly the spray gun 4 can not only move along a longitudinal direction of the lifting channel 12, but also move along a lateral direction of the lifting channel 12, which greatly increases the operating range of the spray gun 4.

Optionally, as shown in FIG. 4, the first sliding assembly 6 specifically includes: a first guide rail 61, a first guide block 62, and a sliding motor 303. The first guide rail 61 is fixedly connected to the hanger 5, the first guide block 62 is provided in the first guide rail 61 and the first guide block 62 is provided with the spray gun 4. The sliding motor 303 is electrically connected to the first guide block 62 to control the sliding of the first guide block 62 on the first guide block 61.

Therefore, the first sliding assembly 6 includes the first guide rail 61, the first guide block 62, and the sliding motor 303, which has a simple structure and is easy to produce and install. Further, the first guide block 62 is controlled by the sliding motor 303 to drive the spray gun 4 to slide, which improves the automation degree of the spraying robot 100, reduces the labor intensity and the dependence of the product on the labors.

Optionally, the spraying robot 100 further includes: a rotating assembly 7. The rotating assembly 7 is provided on the first sliding assembly 6, and the spray gun 4 is provided on the rotating assembly 7, so that the rotating assembly 7 can rotate relative to an operating surface of the spray gun 4 under the action of the rotating assembly 7.

Therefore, the spray gun 4 can rotate through the arrangement of the rotating assembly 7, which not only increases the spraying range of the spray gun 4, but also increases the spraying angle of the spray gun 4, thereby further improving the flexibility and automation degree of use of the spraying robot 100.

In some embodiments of the present invention, the spraying robot 100 further includes a second lifting mechanism. The second lifting mechanism is provided on the support body 1. The second lifting mechanism can move relative to the support body 1. A lifting channel 12 is provided in the second lifting mechanism.

Therefore, by providing the second lifting mechanism, and the second lifting mechanism can move relative to the support body 1, the lifting channel 12 is provided in the second lifting mechanism, so that the movement range of the first lifting mechanism 2 in the lifting channel 12 can be further increased with the movement of the second lifting mechanism, thereby further increasing the operating range of the spray gun 4.

Optionally, the second lifting mechanism specifically includes: a second guide rail and a second guide block slidably connected to each other; and a lifting channel 12 is provided on the second guide block.

Therefore, the second lifting mechanism includes the second guide rail and the second guide block. The lifting channel 12 is provided on the second guide block. Such structure is simple and easy to produce and install, and is easy to ensure that the movement direction of the second lifting mechanism is maintained in a straight line, which makes the product easier to control, thereby improving the product accuracy and automation degree.

In some embodiments of the present invention, the spraying robot 100 further includes: a material barrel 8, and/or a moving device 9, and/or a power supply device 10. The material barrel 8 is provided within the support body 1. A communicating conveying pipeline is provided between the spray gun 4 and the material barrel 8. The moving device 9 is provided at a bottom portion of the support body 1 to drive the support body 1 to move. The power supply device 10 is provided within the support body 1 to provide electrical energy for the spraying robot 100 during operation.

Therefore, by providing the material barrel 8 within the support body 1, it is convenient for the spray gun 4 to directly draw the paint from the material barrel 8 through the conveying pipeline for spraying. That is, the spraying robot 100 can bring the paint itself, without needing to connect to an external feeding device, which is beneficial to improve the autonomous and independent walking ability of the spraying robot 100, and avoid reducing the automation degree caused by the restriction of the external feeding device. The moving device 9 is provided at the bottom portion of the support body 1, so that the moving device 9 can drive the support body 1 to move, and then the spraying robot 100 can walk. Power is supplied by the power supply device 10, so that the spraying robot 100 can have energy required for the walking without needing to connect to an external power source through a cable line, thereby achieving the autonomous walking, reducing the dependence on the external resources and labors, and avoiding interference of the cable line to the spraying robot 100 during the use.

According to a specific embodiment of the present invention, the spraying robot 100 can perform fully automatic spraying. The spraying robot 100 includes an automatic spraying system, a robot walking and route planning system, a two-stage lifting mechanism, etc., which can implement the spraying on the wall and ceiling and the detection of the spraying quality, etc.

The spray gun 4 of the automatic spraying system has two dimensions of freedoms, which can implement horizontal and vertical rotations. In addition, the spraying system has an extension arm, which can be combined with the rotation of a spray head to implement the spraying on special-shaped walls such as bay windows, etc. The extension arm mechanism of the spray gun 4 is provided with a folding and rotating mechanism, which is convenient for the device to enter and exit an elevator, a room door and other narrow space areas.

Furthermore, spraying, material storage, power supply, navigation, and walking can be integrated into one to implement a fully automatic spraying operation.

Specifically, as shown in FIGS. 1 and 2, the spraying robot 100 in the present invention includes a support body 1 which is provided with a lifting channel 12, and the lifting channel 12 is provided with a first lifting mechanism 2 capable of moving up and down along the lifting channel 12. As shown in FIG. 5, the first lifting mechanism 2 moves up and down along a guide rail in the lifting channel 12.

As shown in FIG. 2, the first lifting mechanism 2 is provided with a hanger 5 which is horizontally arranged; the hanger 5 is fixedly provided with a first guide rail 61 perpendicular to the lifting channel 12; and the first guide rail 61 is slidably provided with a first guide block 62; the spray gun 4 is provided on the first guide block 62 through the rotating assembly 7; and the first guide block 62 is driven by the sliding motor 303 to slide along the first guide rail 61. This structure makes the spray gun 4 move up and down with the first lifting mechanism 2 and move horizontally as the first guide block 62 slides on the first guide rail 61, and rotate to different angles with the rotation of the rotating assembly 7, in order to achieve horizontal and vertical rotations and increase the operating range of the spray gun 4.

As shown in FIG. 5, further, the first lifting mechanism 2 is configured as a two-stage lifting mechanism and serve as an extension arm of the spraying system. The first lifting mechanism 2 is partitioned into two portions. A first portion of the first lifting mechanism 2 is fixed to the support body 1; a second portion and the first portion of the first lifting mechanism 2 are separately provided on left and right sides of the first lifting mechanism 2. The hanger 5 and the spray gun 4 are provided on the second portion of the first lifting mechanism 2 in order to move up and down with the second portion of the first lifting mechanism 2.

As shown in FIG. 5, specifically, the second portion of the first lifting mechanism 2 is provided with a transmission belt 22 and two transmission wheels 21 matched with the transmission belt 22; one transmission wheel in transmission connection with the lifting motor 3 is a driving wheel 211, and the other transmission wheel is a driven wheel 212. The first portion 221 of the transmission belt is fixedly connected to the fixed plate 111 on the support body 1. A first portion 222 of the transmission belt is movable; and the spray gun 4 is connected to the first portion 222 of the transmission belt. Driven by the lifting motor 3, the transmission wheel 21 in transmission connection with the lifting motor 3 rotates, so that the transmission belt 22 moves accordingly. Since the first portion 221 of the transmission belt is fixed, as shown in FIG. 5, when the driving wheel 211 rotates clockwise, the first portion 222 of the transmission belt moves downward as a whole to implement the downward movement of the first lifting mechanism 2, and the spray gun 4 fixed on the second portion of the transmission belt 22 moves down accordingly. At the same time, the fixed position of the spray gun 4 and the transmission belt 22 also moves downward as a whole relative to the first lifting mechanism 2, that is, double displacement is implemented. When the driving wheel 211 rotates counterclockwise, the first portion 222 of the transmission belt moves upward as a whole to implement the upward movement of the first lifting mechanism 2; and the spray gun 4 fixed on the second portion of the transmission belt 22 moves upward accordingly. Meanwhile, since the fixed position of the spray gun 4 and the transmission belt 22 also moves upward as a whole relative to the first lifting mechanism 2, thereby implementing the two-stage lifting and then implementing the two-stage lifting to the ceiling wall surface to spray the ceiling. At the same time, because it is a two-stage lifting, the first lifting mechanism 2 has smaller a storage size and is easy to enter the elevator, secondary bedroom and other small space areas. In addition, a single motor implements the two-stage lifting, which has a simple structure, reliability and a low cost.

Therefore, the spraying robot 100 according to the embodiment of the present invention can be used for automatic spraying of interior walls of buildings. The outstanding feature thereof is fully automatic spraying, which can ensure that the spraying robot 100 can automatically drive along a predetermined route and complete the spraying on the wall surface without requiring manual labor. In addition, the spraying robot 100 utilizes digital spraying, which can improve the spraying efficiency and spraying effect of the spraying robot 100.

In a specific embodiment of the first lifting mechanism 2, the transmission belt 22 is provided with a first matching portion 23 fixedly connected to the support body 1. The first lifting mechanism 2 moves relative to the support body 1 through the first matching portion 23 under the driving of the lifting motor 3.

Therefore, after the transmission belt 22 is provided with the first matching portion 23 fixedly connected to the support body 1, since the transmission belt 22 is driven by the lifting motor 3 to continuously circulate and rotate, when the transmission belt 22 is fixed to the support body 1 through the first matching portion 23, the first lifting mechanism 2 moves as a whole relative to the support body 1. That is, the synchronous belt of the first lifting mechanism 2 can not only rotate around the transmission wheel 21, but can also move as a whole relative to the support body 1. Thereby, the first lifting mechanism 2 can implement the two-stage lifting, which increases a space range of the spraying operation without increasing the size of the spraying robot 100, thereby effectively reducing the cost, and meanwhile enhancing the flexibility of the spraying operation and the adaptability to the operating environment, which is especially suitable for a spraying environment with a narrow and small space or a higher height.

In addition, the first matching portion 23 is fixedly connected to the support body 1; the connection includes, but not limited to, riveting, a bolt connection, and a snap connection, which can limit the movement range of the first lifting mechanism 2, thereby ensuring the operating stability and reliability of the first lifting mechanism 2.

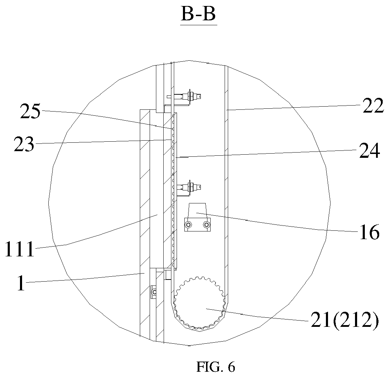

In an embodiment of the present invention, as shown in FIG. 6, the first matching portion 23 is provided on a side of the transmission belt 22, and is specifically the side adjacent to the support body 1; and the other side of the transmission belt 22 is provided with the spray gun 4 of the spraying robot 100, that is, the spray gun 4 of the spraying robot 100 is provided on the side of the transmission belt 22 away from the support body 1, so that the spray gun 4 moves on the transmission belt 22 under the driving of the lifting motor 3, and the first lifting mechanism 2 moves relative to the support body 1.

Optionally, the first matching portion 23 is provided on the side of the transmission belt 22 adjacent to the support body 1, and the spray gun 4 of the spraying robot 100 is provided on the side of the transmission belt 22 away from the support body 1, so that the spray gun 4 can move on the transmission belt 22 under the driving of the lifting motor 3 to adjust the operating height of the spray gun 4. The spray gun 4 and the first matching portion 23 are respectively provided on both sides of the transmission belt 22 to increase the stroke of the spray gun 4 on the transmission belt 22. At the same time, the first lifting mechanism 2 can move relative to the support body 1, so that the spray gun 4 can not only move on the transmission belt 22, but can also move with the first lifting mechanism 2 as a whole relative to the support body 1, thereby implementing the two-stage lifting of the spraying position of the spray gun 4, increasing the space range of the spraying operation without increasing the size of the spraying robot 100, which effectively reduces the cost, and can also enhance the flexibility of the spraying operation and the adaptability to the operating environment, and is especially suitable for the spraying robots 100 needing to enter a spraying environment with a narrow and small space or a higher height. When a length from a side of the spray gun 4 to the transmission belt 22 of the first matching portion 23 is equal to a length from the other side of the spray gun 4 to the transmission belt 22 of the first matching portion 23, the stroke of the spray gun 4 on the transmission belt 22 is maximum.

Optionally, as shown in FIG. 6, the first lifting mechanism 2 further includes a second matching portion 24. The second matching portion 24 is provided on the support body 1, and at least a part of the transmission belt 22 is provided in the second matching portion 24 to implement the fixed connection between the transmission belt 22 and the support body 1 by the matching of the first matching portion 23 and the second matching portion 24.

Thus, the second matching portion 24 is provided on the support body 1, and at least a part of the transmission belt 22 is provided in the second matching portion 24, that is, the first matching portion 23 provided in the transmission belt 22 can implement the fixed connection between the transmission belt 22 and the support body 1 through the matching of the first matching portion 23 and the second matching portion 24, which greatly reduces the possibility of safety accidents of the first lifting mechanism 2 during the spraying process, and effectively improves the safety and stability of the spraying robot 100 . Compared with a direct connection manner, the fixed connection mode through the matching of the first matching portion 23 and the second matching portion 24 has a greater strength and is less likely to fall off and slip.

Further, as shown in FIG. 5, the first matching portion 23 is a tooth groove adapted to the shape of the wheel tooth of the transmission wheel 21; and the second matching portion 24 is a convex tooth with the same shape as the wheel tooth to implement the fixed connection between the transmission belt 22 and the support body 1 through the matching of the tooth groove and the convex tooth; and/or the second matching portion 24 is provided with a tooth-shape block 25 protruding toward the transmission belt 22 to fix the first matching portion 23 through the toothed block 25.

In other words, through the tooth grooves on the first matching portion 23 and the convex teeth on the second matching portion 24, the first matching portion 23 and the second matching portion 24 can be engaged with each other through the convex teeth and tooth grooves of the same shape. Therefore, the strength of the fixed connection between the transmission belt 22 and the support body 1 is enhanced, and the transmission belt 22 is firmer during the transmission process, thereby improving the safety and stability of the lifting process of the first lifting mechanism 2. The tooth groove is adapted to the shape of the wheel tooth of the transmission wheel 21, so that the tooth groove and convex tooth can be selected with the same processing parameters as the wheel tooth of the transmission wheel 21, which is convenient for processing and is beneficial to ensure processing accuracy and reduce the cost.

It should be understood that the second matching portion 24 can also be provided with a tooth groove having the same shape as the wheel tooth of the transmission wheel 21; and the first matching portion 23 is correspondingly provided with a convex tooth having the same shape as the wheel teeth of the transmission wheel 21, which can also implement the mutual matching between the first matching portion 23 and the second matching portion 24 to implement the fixed connection between the transmission belt 22 and the support body 1. There is no limitation here, as long as the actual needs are met.

In addition, by providing a tooth-shape block 25 protruding toward the transmission belt 22 on the second matching portion 24, so that the toothed block 25 fixes the first matching portion 23, which can improve the fixing strength between the first matching portion 23 and the second matching portion 24. At the same time, there is no need to process the first matching portion 23, thereby simplifying the structure of the transmission belt 22 and saving processing procedures. Therefore, the standard transmission belt 22 can be used, which is beneficial to reduce the cost.

In some embodiments of the present invention, the first lifting mechanism 2 further includes an elevating frame 26 which is slidably connected to the support body 1 in a height direction. The transmission wheel 21 in transmission connection with the lifting motor 3 is a driving wheel 211. The driving wheel 211 is mounted at one end of the elevating support 26 in the height direction; the other transmission wheel 21 is a driven wheel 212; and the driven wheel 212 is mounted at the other end of the elevating support 26 in the height direction. The transmission belt 22 is wound around peripheries of the driving wheel 211 and the driven wheel 212. The first portion 221 of the transmission belt is located on a side of a central connection line between the driving wheel 211 and the driven wheel 212; and the first portion 222 of the transmission belt is located on the other side of the central connection line between the driving wheel 211 and the driven wheel 212. The first portion is fixedly connected to the support body 1; and the second portion is configured to mount the spray gun 4. When the spray gun 4 is located at a highest operating position, the second portion is located at an upper portion of the first lifting mechanism 2, and the first portion is located at a lower portion of the first lifting mechanism 2.

Accordingly, after the lifting motor 3 is connected to the driving wheel 211, the lifting motor 3 can drive the driving wheel 211 to rotate. The rotation of the driving wheel 211 can drive the transmission belt 22 to move. In the process of driving the transmission belt 22 to move by the driving wheel 211, the first portion remains stationary, the elevating support 26 moves relative to the support body 1 in the height direction, and the second portion moves relative to the elevating support 26 in the height direction. In the ascent process, during the movement of the transmission belt 22 driven by the driving wheel 211, the first portion remains stationary, the elevating support 26 moves upward relative to the support body 1 in the height direction, and the second portion moves upward relative to the elevating support 26 in the height direction. In the descent process: during the movement of the transmission belt 22 driven by the driving wheel 211, the first portion remains stationary, the elevating support 26 moves downward relative to the support body 1 in the height direction, and the second portion moves downward relative to the elevating support 26 in the height direction.

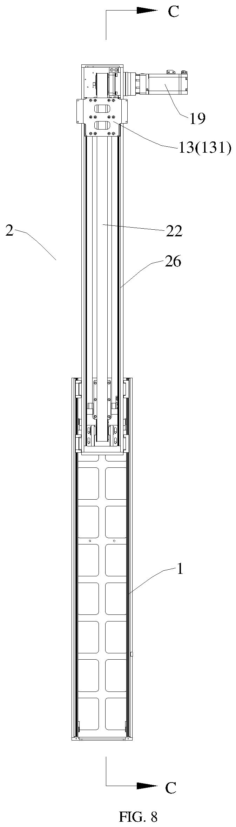

When the spray gun 4 is located at the highest operating position, as shown in FIGS. 8 to 18 and FIG. 19a, the second portion is located at the upper portion of the first lifting mechanism 2, and the first portion is located at the lower portion of the first lifting mechanism 2. When the spray gun 4 is located at the lowest working position, as shown in FIGS. 8 to 18 and FIG. 19c, the second portion is located at the lower portion of the first lifting mechanism 2, and the first portion is located at the upper portion of the first lifting mechanism 2. When the spray gun 4 is located at an middle working position, as shown in FIGS. 8 to 18 and FIG. 19 b, the second portion is located at the middle portion of the first lifting mechanism 2, and the first portion is located at the middle portion of the first lifting mechanism 2.

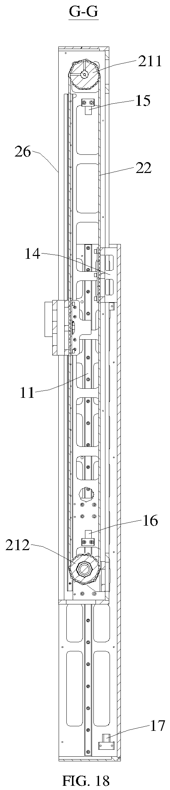

Specifically, by comparing FIG. 8 with FIG. 18, it can be seen that the elevating support 26 is slidably connected to the support body 1, and the first portion 221 of the transmission belt is fixed on the support body 1, accordingly the transmission belt 22 can drive the elevating support 26 to slide relative to the support body 1 in the height direction, which is defined as a first-stage stroke. The transmission belt 22 is further provided with the first portion and the second portion; and the spray gun 4 is mounted on the second portion, so that the transmission belt 22 drives the spray gun 4 to move in the height direction, which is defined as a two-stage stroke, that is, a single transmission belt 22 moves to produce a two-stage movement stroke, so that the spray gun 4 can implement the two-stage lifting including the first-stage stroke and the two-stage stroke under the single driving of the driving wheel 211; and the lifting strode of the spray gun 4 is equal to twice the stroke of the elevating support 26. As a whole, the structure of the spraying robot 100 can be effectively simplified on the premise of obtaining larger lifting stroke, and the equipment cost can be reduced. Further, the two-stage lifting of the spray gun 4 can expand the operating coverage of the device in the height direction and improve the versatility of the device; on the other hand, the height of the device in a non-operating state can be reduced, thereby improving the passage capacity of the device in a small space.

In this embodiment, the first portion is fixedly connected to the upper portion of the support body 1. Such design can enable the first lifting mechanism 2 to reach a higher position under the premise that the height of the support body 1 remains unchanged, which is then beneficial to expand the operating coverage of the device in the height direction. In addition, the first lifting mechanism 2 further includes a driving motor 19. An output end of the driving motor 19 is connected to the driving wheel 211. The transmission belt 22 is a toothed belt; the driving wheel 211 and the driven wheel 212 are both gears; and the toothed belt is matched with the gears to implement the reliable transmission.

Optionally, the first lifting mechanism 2 further includes a first connector 13 and a second connector 14. One end of the first connector 13 is fixedly connected to the second portion, and the other end of the first connector 13 is connected to the spray gun 4. One end of the second connector 14 is fixedly connected to the first portion, and the other end of the second connector 14 is connected to the support body 1.

Specifically, by providing the first connector 13 and the second connector 14, the reliability and convenience of the connections between the transmission belt 22 and the spray gun 4, and between the transmission belt 22 and the support body 1 can be improved. Of course, it should be appreciated that the first connector 13 can also be a component part of the spray gun 4; and the second connector 14 is a component part of the support body 1. Such integrated design can reduce the number of parts, thereby shortening the installation process.

Further, the first connector 13 includes a connector main board 131 and a connector side plate 132. A side of the connector main board 131 is connected to the second portion, and the other side of the connector main board 131 is connected to the spray gun 4. Both ends of the connector main board 131 are provided with the connector side plate 132, and two connector side plates 132 are respectively slidably connected to the elevating support 26. Optionally, first slide rails are provided on inner sides of vertical walls 261 on both sides of the elevating support 26; and a first sliding block is provided on an outer side of the connector side plate 132; and the first slide rail is slidably connected to the first sliding block. Specifically, through the sliding connection between the two connector side plates 132 and the elevating support 26, the stability and accuracy of the elevating movement of the first connector 13 can be improved, and accordingly the operating accuracy of the spray gun 4 can be improved.

In some embodiments of the present invention, the elevating support 26 includes two vertical walls 261 and two reinforcing walls 262. The upper/lower ends of the two vertical walls 261 are connected by the reinforcing wall 262; two sides of the two vertical walls 261 adjacent to each other in the horizontal direction are respectively provided with relief openings. The relief opening is an elongated notch extending along the height direction of the elevating support 26. The first connector 13 passes through one relief opening, and the second connector 14 passes through the other one. By providing the relief openings on the front and rear sides of the elevating support 26, and providing reinforcement walls 262 at the upper and lower ends, the stability of the overall structure of the elevating support 26 can be guaranteed, and the first connector 13 and the second connector 14 can guaranteed to produce larger strokes in the height direction.

Thus, an area enclosed by the vertical walls 261 and the reinforcing walls 262 can form a receiving space. Two relief openings are provided on both sides of the receiving space. The driving wheel 211, the driven wheel 212 and the transmission belt 22 are all located in the receiving space, without protruding from the elevating support 26. Such design can prevent the driving wheel 211 and the driven wheel 212 from colliding with the external structure, that is, to protect the driving wheel 211 and the driven wheel 212, thereby improving the service life of the device. The driving wheel 211 is provided in the upper portion of the receiving space; the driving wheel 211 is fixed at the output end of the driving motor 19; and the driving motor 19 passes through the vertical walls 261.

In some embodiments of the present invention, the first lifting mechanism 2 further includes a first upper limit member 15 and a first lower limit member 16. The first upper limit member 15 is provided on the upper portion of the elevating support 26, and is configured to limit the high position of the second portion. The first lower limit member 16 is provided at the lower portion of the elevating support 26, and is configured to limit the low position of the second portion.

In addition, the first lifting mechanism 2 further includes a second upper limit member and a second lower limit member 17. The second upper limit member is provided on the upper portion of the support body 1, and is configured to limit the high position of the elevating support 26. The second lower limit member 17 is provided at the lower portion of the support body 1, and is configured to limit the lower position of the elevating support 26.

Specifically, by providing the first upper limit member 15 and the first lower limit member 16, the high and low limit positions of the spray gun 4 relative to the elevating support 26 can be reliably controlled to avoid abnormal collision of the spray gun 4 which causes a device failure. By providing the second upper limit member and the second lower limit member 17, the high and low limit positions of the elevating support 26 can be reliably controlled to avoid abnormal collision of the elevating support 26 which causes the device failure.

In an example, the first upper limit member 15 is configured to limit the highest position of the first connector 13 relative to the elevating support 26; and the first lower limit member 16 is configured to limit the lowest position of the first connector 13 relative to the elevating support 26. The second upper limit member is configured to limit the highest position of the bottom portion of the elevating support 26; and the second lower limit member 17 is configured to limit the lowest position of the bottom portion of the elevating support 26.

Optionally, the first upper limit member 15, the first lower limit member 16, the second upper limit member, and the second lower limit member 17 are all elastic limit blocks, which can implement the limit on the one hand, and can cushion the collisions on the other hand, in order to avoid rigid impact, thereby increasing the service life of the device.

In some embodiments of the present invention, the second slide rails 11 are provided on the inner sides of the side walls on both sides of the support body 1; and the second sliding blocks 18 are provided on the outer sides of the vertical walls 261 on both sides of the elevating support 26. The second sliding block 18 is located at the lower portion of the elevating support 26, and is slidably connected to the second slide rail 11. Specifically, by providing the second sliding blocks 18 at the lower portion of the elevating support 26, it can be ensured that when the elevating support 26 reaches the highest position, the second sliding block 18 can still remain connected with the second slide rail 11, thereby ensuring the reliability of the sliding between the elevating support 26 and the support body 1. In addition, through the sliding connection of the two second sliding blocks 18 and the support body 1, the stability and accuracy of the elevating movement of the elevating support 26 can be improved. A back plate is connected between the side walls on both sides of the support body 1, and the first portion is connected to the back plate of the support body 1.

In some embodiments of the present invention, the rotating assembly 7 is provided on the support body 1, and the rotating assembly 7 includes a first rotating structure 71 and a second rotating structure 72. The first rotating structure 71 is provided on the support body 1. The second rotating structure 72 is provided on the first rotating structure 71; the second rotating structure 72 and the first rotating structure 71 have different rotation directions. The spray gun 4 is provided on the second rotating structure 72 to be driven by the rotating assembly 7 to rotate.

Thus, by providing the rotating assembly 7 on the support body 1, the spray gun 4 can rotate relative to the support body 1, to change the spraying orientation of the spray gun 4 according to the requirements of the operating surface of the spraying. Optionally, the rotating assembly 7 includes the first rotating structure 71 and the second rotating structure 72. By providing the first rotating structure 71 on the support body 1, and proving the second rotating structure 72 on the first rotating structure 71, and making the second rotating structure 72 rotate in a different direction than the first rotating structure 71, so that the rotating structure has two degrees of freedom to increase the spraying range of the spray gun 4 and improve the flexibility of spraying. The rotation direction of the second rotating structure 72 is different from that of the first rotating structure 71. Specifically, an axis of the second rotating structure 72 is perpendicular to an axis of the first rotating structure 71. The spray gun 4 is provided on the second rotating structure 72, and can rotate under the driving of the rotating assembly 7, that is, the spray gun 4 can either rotate with the rotation of the second rotating structure 72 itself, or can rotate together with the second rotating structure 72 along with the first rotating structure 71. Of course, the spray gun 4 can also rotate with the first rotating structure 71 while rotating with the second rotating structure 72, to implement the orientation adjustment in two degrees of freedom in order to adapt to different operating environments of the spraying, thereby improving the flexibility of the spraying to meet the requirements of different spraying precisions, reducing dependence on labors, and reducing the costs.

It should be appreciated that for operating surfaces of the spraying in different directions in a small space, the overall movement of the spraying robot 100 is limited. The change of the spraying orientation and completion of the spraying in a smaller space can be implement by the first rotating structure 71 and the second rotating structure 72. Even when the rotation of the first rotating structure 71 is limited in a smaller space, the orientation of the spray gun 4 can still be adjusted by the second rotating structure 72 to complete the spraying. For example, for operating surfaces of the spraying with complex structures such as bay windows and special-shaped ceilings, etc., it is necessary to adjust the orientation of spray gun 4 in time according to a distance between spray gun 4 and the operating surface and an orientation of the operating surface during the spraying to ensure that the paint sprayed on the operating surface is uniform and the thickness of the paint is consistent, thereby improving the spraying accuracy.

It should be noted that ranges of rotation angles of the first rotating structure 71 and the second rotating structure 72 can be any angle range within a range of, that is, the first rotating structure 71 and the second rotating structure 72 can rotate around the rotating shaft in a complete circle, or can rotate around the rotating shaft in a part of a circle, such as rotating in a range of 0° to 180° or 0° to 90°. Optionally, the ranges of the rotation angles of the first rotating structure 71 and the second rotating structure 72 can be a range of, to expand the spraying range of the spray gun 4 as much as possible.

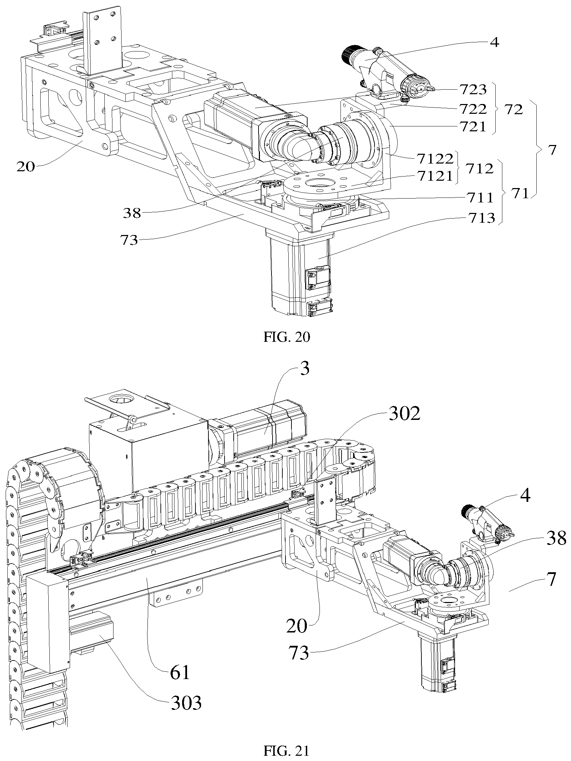

In an embodiment of the present invention, as shown in FIG. 20, one end of the support body 1 is provided with a rotating platform 73. The first rotating structure 71 specifically includes: a first rotating base 711, a first rotating body 712, and a first rotating motor 713. The first rotating base 711 is provided on the rotating platform 73; the first rotating body 712 is provided coaxially with the first rotating base 711, and the first rotating body 712 can rotate on the first rotating base 711; the first rotating motor 713 is in transmission connection with the first rotating body 712 to implement the rotation of the first rotating body 712.

In other words, the rotating platform 73 is provided at one end of the support body 1 to provide an installation space and a rotating operating space for the rotating assembly 7. The first rotating structure 71 includes the first rotating base 711 provided on the rotating platform 73 and the first rotating body 712 provided coaxially with the first rotating base 711. The first rotating structure 71 rotates relative to the support body 1 through the rotation of the first rotating body 712 on the first rotating base 711, thereby changing the spraying orientation of the spray gun 4 to improve spraying flexibility in order to adapt to different operating environments of the spraying. Through the transmission connection between the first rotating motor 713 and the first rotating body 712, the first rotating body 712 rotates under the driving of the first rotating motor 713, and the electric driving of the first rotating structure 71 is implemented, which can reduce the dependence on labors. Accordingly, the operating accuracy of the rotation is higher, and the continuity and stability of the spraying operation are stronger. Preferably, the first rotating motor 713 is in direct transmission connection with the first rotating body 712, such manner has a higher transmission efficiency, a simple structure and occupies less space.

In an embodiment of the present invention, as shown in FIG. 21, the second rotating structure 72 specifically includes: a second rotating base 721, a second rotating body 722, and a second rotating motor 723. The second rotating base 721 is provided on the first rotating body 712; the second rotating body 722 is provided coaxially with the second rotating base 721; and the second rotating body 722 can rotate on the second rotating base 721. The spray gun 4 is provided on the second rotating body 722, and the second rotating motor 723 is in transmission connection with the second rotating body 722 to implement the rotation of the second rotating body 722.

Therefore, the second rotating body 722 rotates on the second rotating base 721, such that the second rotating structure 72 rotates relative to the first rotating body 712, accordingly the spraying orientation of the spray gun 4 is further adjusted, thereby improving the flexibility of the spraying and making the spraying robot 100 more adaptable to the operating environment of the spraying. Through the transmission connection between the second rotating motor 723 and the second rotating body 722, the second rotating body 722 can rotate under the driving of the second rotating motor 723, thereby implementing the electric driving of the second rotating structure 72, and accordingly the second rotating body 722 can independently rotate relative to the first rotating body 712 without being limited by the first rotating motor 713.

It should be understood that the first rotating body 712 and the second rotating body 722 can also be driven by only one rotating motor, and a transmission wheel 21 or other structures can be provided in the middle for transmission, but at this time, the first rotating body 712 and the second rotating body 722 need to rotate simultaneously, and cannot implement respectively independent rotation, that is, the activities of the first rotating body 712 and the second rotating body 722 are related. In addition, the second rotating body 722 is driven by the second rotating motor 723, accordingly the dependence on labors can also be reduced, the accuracy of the rotating operation can be improved, and the continuity and stability of the spraying operation can be ensured.

In an embodiment of the present invention, as shown in FIG. 20, the first rotating body 712 specifically includes a first plate 7121 and a second plate 7122 connected to a side of the first plate 7121. The first plate 7121 is at a preset angle to the second plate 7121, and the second rotating motor 723 is provided within a space sandwiched by the first plate 7121 and the second plate 7122. Optionally, the preset angle is 90°.

In other words, the second plate 7122 is connected to a side of the first plate 7121, and the first plate 7121 is at a preset angle to the second plate 7122, in order to reserve an installation space for the second rotating motor 723, so that the second rotating motor 723 can be provided in the space sandwiched between the first plate 7121 and the second plate 7122, while ensuring that the second rotating motor 723 does not collide with the first rotating structure 71 when the second rotating structure 72 rotates, to avoid mutual interference during the rotation.

It should be emphasized that the preset angle between the first plate 7121 and the second plate 7122 can also be any angle that can receive the second rotating motor 723. Optionally, the preset angle is 90°, which is convenient for the construction of the spatial coordinate model and the positioning of the spray gun 4, and accordingly the mutual interference is not produced during the rotation.

In some embodiments of the present invention, as shown in FIG. 21, the spraying robot 100 further includes a right-angle speed reducer 38. One end of the right-angle speed reducer 38 is connected to the second rotating motor 723, and the other end is connected to the second rotating body 722, so that an angle between the axis of the second rotating motor 723 and the axis of the second rotating base 721 is a right angle.

Accordingly, one end of the right-angle speed reducer 38 is connected to the second rotating body 723 and the other end is connected to the second rotating body 722, which can provide the transmission between the second rotating motor 723 and the second rotating body 722. On the one hand, an output power of the second rotating motor 723 is reduced such that the rotation speed of the second rotating body 722 is reduced, that is, the rotation speed of the spray gun 4 is reduced, so that the spray gun 4 is suitable for spraying on the operating surface of the spraying with high precision requirements in a small range, to avoid that the excessively fast rotation speed of the second rotating body 722 affects the spraying accuracy of the spray gun 4. On the other hand, an output direction of the second rotating motor 723 can be changed by the right-angle speed reducer 38, which facilitates the installation of the second rotating motor 723, and allows the second rotating motor 723 to reasonably use the reserved space between first plate 7121 and the second plate 7121 on the first rotating body 712, to prevent mutual interference with the first rotating structure 71 during the rotation due to a larger occupied space. In addition, the right-angle speed reducer 38 is employed to reduce the speed of the second rotating motor 723, so that the second rotating motor 723 can use the same type of motor as the first rotating motor 713, which increases the versatility of the motor and reduces costs of the production and maintenance.

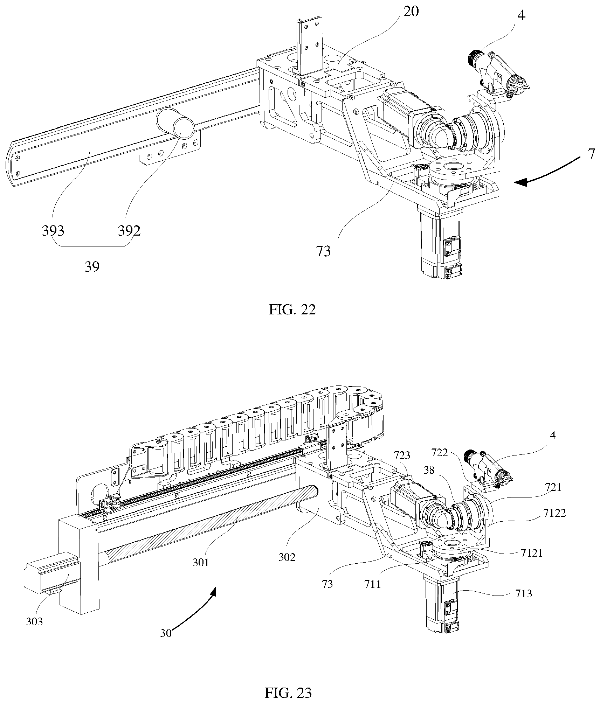

In an embodiment of the present invention, as shown in FIG. 22, the moving assembly 39 specifically includes: a rotating shaft 392 provided on the support body 1; and a rotating blade 393 rotatably connected to the rotating shaft 392. The rotating assembly 7 is provided on the rotating blade 393.

Accordingly, the moving assembly 39 includes a rotating shaft 392 and a rotating blade 393. The rotating shaft 392 is provided on the support body 1, and the rotating blade 393 is rotatably connected to the rotating shaft 392, so that the rotating blade 393 can be driven by the rotating shaft 392 to rotate relative to the support body 1. The rotating assembly 7 is provided on the rotating blade 393, so that the rotating assembly 7 can rotate with the rotating blade 393 relative to the support body 1, to increase the spraying range of the spray gun 4 and improve the flexibility of the spraying and the adaptability of the spraying to the environment. It should be emphasized that the number of blades can be one or more. For example, two blades are chosen to be symmetrically arranged with respect to the rotating shaft 392, which can improve the stability of the rotating blades 393 during the rotation.

In some embodiments of the present invention, the spraying robot 100 further includes a rotating bracket 20. One end of the rotating bracket 20 is connected to the support body 1, and a wire passing space is provided within the rotating bracket 20; and the other end of the rotating bracket 20 is connected to the rotating assembly 7. As a result, the wire passing space can reserve a passage for connecting pipelines between various components of the spraying robot 100, to prevent the connecting pipelines and the various components of the spraying robot 100 from being entangled during the spraying operation and affecting the normal spraying operation, which can also prevent the pipeline from being damaged to reduce maintenance costs. The rotating assembly 7 is provided at the other end of the rotating bracket 20 to facilitate the arrangement of the pipelines between the rotating assembly 7 and the body of the spraying robot 100 in the wire passing space of the rotating bracket 20 and minimize the exposure of the pipelines as much as possible.

Optionally, as shown in FIG. 20, the first rotating base 711 is provided on the rotating bracket 20. Accordingly, the first rotating base 711 is provided on the first rotating base 711 to rotate, so that the first rotating structure 71 can rotate relative to the support body 1, thereby changing the spraying orientation of the spray gun 4, and improving the flexibility of spraying and adaptability to different operating environments of the spraying.

In some embodiments of the present invention, the spraying robot 100 further includes a second sliding assembly 30. The second sliding assembly 30 is provided on the support body 1; and the first rotating structure 71 is provided on the second sliding assembly 30; that is to say, the second sliding assembly 30 can be provided on the support body 1 and can move relative to the support body 1. In addition, the first rotating structure 71 is provided on the second sliding assembly 30, so that the second sliding assembly 30 can drive the first rotating structure 71 to move in the horizontal direction, thereby increasing the spraying range of the spraying robot 100 and improving the flexibility of spraying.

It should be emphasized that the range of the rotation angle of the first rotating structure 71 can be any angle range within the range of 0° to 360°, that is, the first rotating structure 71 can rotate around the rotating shaft in a complete circle, or can rotate around the rotating shaft in a part of a circle, such as in range of 0° and 180°, or in a range of 0° to 90°. Optionally, the range of the rotation angle of the first rotating structure 71 is a range of 0° to 360°, to expand the spraying range of the assembly of spray gun 4 as much as possible.

Further, the sliding direction of the second sliding assembly 30 is parallel to the horizontal plane and parallel to the direction of the operating surface of the spraying. It should be understood that during the spraying operation, the length of the operating surface in the horizontal direction is usually much greater than the height in the vertical direction. The sliding direction of the second sliding assembly 30 is parallel to the horizontal plane and the operating surface of the spraying, so that the spraying robot 100 as a whole can be kept stable within a certain distance in the horizontal direction, while the spray gun 4 slides with the second sliding assembly 30 to complete the spraying operation in the horizontal range within the distance, to reduce the impact of the movement of the spraying robot 100 on the stability and the spraying accuracy of the spray gun 4.

Optionally, as shown in FIG. 23, the second sliding assembly 30 includes: a lead screw 301 and a bracket sliding block 302. The lead screw 301 is provided on the support body 1, and the bracket sliding block 302 is provided with threads matching the lead screw 301. When the lead screw 301 is driven by the sliding motor 303 to rotate, the bracket sliding block 302 can move along the axial direction of the lead screw 301, and the bracket sliding block 302 is provided with the rotating assembly 7.

Accordingly, after the sliding motor 303 drives the lead screw 301 to rotate, the bracket sliding block 302 moves along the axial direction of the lead screw 301 through the threads matched with the lead screw 301 and the rotating assembly 7, thereby driving the rotating assembly 7 to move along the axial direction of the lead screw 301, to expand the spraying range of the spraying robot 100 and improve the flexibility of the spraying and the adaptability of the spraying to the environment. It should be noted that the threads on the bracket sliding block 302 that matches the lead screw 301 can be provided in the bracket sliding block 302, that is, the bracket sliding block 302 is provided with a threaded hole matching the lead screw 301, or the threaded hole can be provided on an outer side of the bracket sliding block, that is, on the side of the bracket sliding block 302 is provided a thread groove matching the lead screw 301, which is not limited here. For example, a threaded hole matching the lead screw 301 can be provided in the bracket sliding bracket 302, to improve the stability of the movement of the second sliding assembly 30.

In some embodiments of the present invention, the spraying robot 100 further includes a movable plate 31 and an electric push rod 32.

Specifically, the movable plate 31 is articulated with the rotating bracket 20; the spray gun 4 is fixedly connected to the movable plate 31, and the spray gun 4 is configured to perform the spraying operation. The movable plate 31 is articulated with the rotating bracket 20 so that the movable plate 31 can rotate relative to the rotating bracket 20. For example, the movable plate 31 can be articulated with the rotating bracket 20 by an articulated shaft. Of course, the movable plate 31 can be articulated with the rotating bracket 20 by other articulating manners, which is not specifically limited here.

In addition, the spray gun 4 is fixedly connected to the movable plate 31. For example, the spray gun 4 can be mounted on the movable plate 31 by using a screw. In such a way, the spray gun 4 can rotate around the axis of the articulated shaft, and can also be fixedly connected in other manners without limitation. The spray gun 4 is configured to perform the spraying operation. For example, the feeding device provides the paint to a muzzle of the spray gun 4 through a pipe, and the muzzle of the spray gun 4 sprays the paint to implement the spraying operation.

In addition, one end of the electric push rod 32 is articulated with the rotating bracket 20, and the other end of the electric push rod 32 is articulated with the movable plate 31, and both ends of the electric push rod 32 can perform a telescopic movement. That is, both ends of the electric push rod 32 can perform a stretching movement, and both ends of the electric push rod 32 can perform a contraction movement.

Accordingly, the electric push rod 32 can rotate relative to the rotating bracket 20, and the electric push rod 32 can also rotate relative to the movable plate 31, which ensures that the both ends of the electric push rod 32 can perform the telescopic movement. When the two ends of the electric push rod 32 perform the telescopic movement, the electric push rod 32 can rotate relative to the rotating bracket 20 and the movable plate 31 simultaneously.

It should be understood that by providing an electric push rod 32 on the spraying robot 100 and through the telescopic movement of the electric push rod 32, the automatic folding and automatic unfolding functions can be implemented, which makes the structure more compact.

It should be appreciated that the spray gun 4 in the embodiment of the present invention can be a foldable spray gun 4, that is, the spray gun 4 itself is foldable, or the spray gun 4 is a fixed spray gun 4, which is not specifically limited in embodiments of the present invention.

It can also be appreciated that the spray gun 4 and the movable plate 31 can be formed in one piece, or can be two independent components, which are not specifically limited in the embodiments of the present invention.

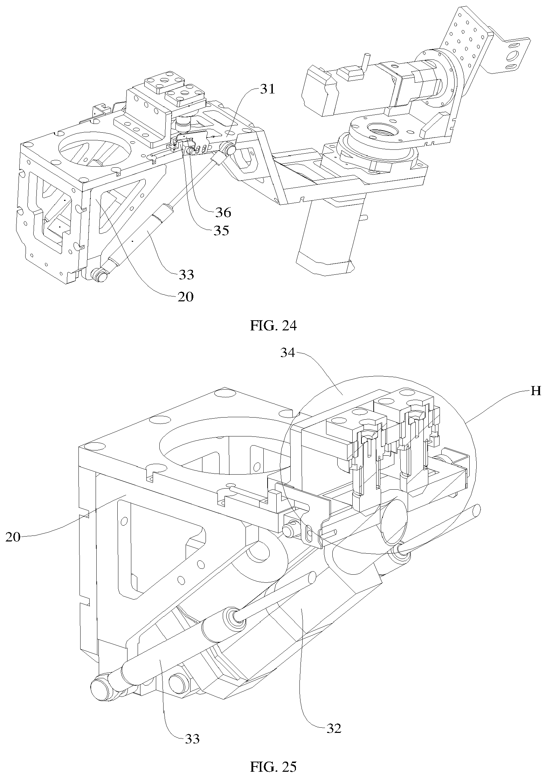

Optionally, as shown in FIG. 24, in order to precisely control the electric push rod 32 to stop the stretching operation after the movable plate 31 is in place, the spraying robot 100 further includes a location switch 35 and a sensor chip 36. The location switch 35 is provided on the rotating bracket 20, and the sensor chip 36 is provided on the movable plate 31.

When the movable plate 31 and the spray gun 4 rotate to the preset positions in place under the thrust of the electric push rod 32, the location switch 35 and the sensor chip 36 trigger a sensing signal. The sensing signal can be transmitted to an upper computer or a processor, so that the upper computer or the processor controls the electric push rod 32 to stop the stretching movements of the both ends.

For example, the location switch 35 is an infrared distance measuring sensor. When the movable plate 31 and the spray gun 4 rotate upward to the preset positions, the sensor chip 36 blocks the infrared rays of the infrared distance measuring sensor, so that the location switch 35 senses the sensor chip 36, and the location switch 35 generates a sensing signal. Alternatively, the location switch 35 and the sensing chip 36 are magnetic sensing sensors, magnets, etc., and the specific implementation manners of the location switch 35 and the sensor chip 36 are not limited in the embodiments of the present invention.

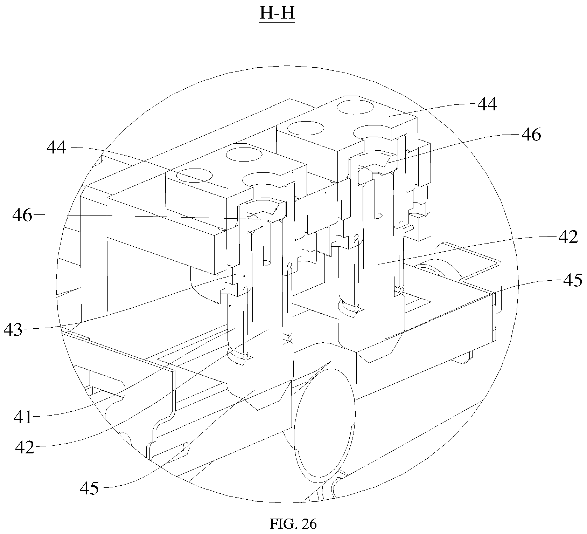

As shown in FIG. 24 and FIG. 26, optionally, the spraying robot 100 further includes an elastic telescopic component. One end of the elastic telescopic component is articulated with the rotating bracket 20, and the other end of the elastic telescopic component is articulated with the movable plate 31. Thereby, the elastic telescopic component can rotate relative to the rotating bracket 20 and the elastic telescopic component can rotate relative to the movable plate 31.

The elastic force of the elastic telescopic component is configured to offset at least a part of the gravity of the spray gun 4, thereby reducing the output power of the electric push rod 32.

Optionally, the number of elastic telescopic components is two. Specifically, the two elastic telescopic components are respectively located on both sides of a rotating surface, and the rotating surface is a plane where the electric push rod 32 is located when rotating, so that both sides of the spraying machine are acted upon by the elastic telescopic components, so that the force on the spraying robot 100 is more uniform, and the operation of the spraying robot 100 is more reliable.

In a specific embodiment, as shown in FIG. 24, the elastic telescopic component is a nitrogen gas spring 33. The electric push rod 32 is located at the center of the rotating bracket 20, and the two nitrogen gas springs 33 are respectively located on both sides of the rotating bracket 20.

In the structure of the electric push rod 32 located in the middle and the two nitrogen gas springs 33 located on both sides of the electric push rod 32, the acting forces of the electric push rod 32 and the two nitrogen gas springs 33 on the movable plate 31 are substantially symmetrically arranged, so that the forces on the movable plate 31 and the spray gun 4 are more uniform, and the rotations of the movable plate 31 and the spray gun 4 are more stable and reliable. In other words, the use of the structure of the double nitrogen gas springs 33 ensures uniform forces on both sides of the electric push rod 32 during the entire movement of the movable plate 31. In addition, the use of the structure of the double nitrogen gas springs 33 reduces the driving load of the electric push rod 32 and the structural size of the spraying robot 100.

In a specific example, the electric push rod 32 and the nitrogen gas spring 33 can be can be articulated through the articulated shaft. For example, the spraying robot 100 further includes: a first lower pin roll, a first upper pin roll, a second lower pin roll, and a second upper pin roll. One end of the electric push rod 32 is articulated with the rotating bracket 20 through the first lower pin roll, and the other end of the electric push rod 32 is articulated with the movable plate 31 through the first upper pin roll. One end of the nitrogen gas spring 33 is articulated with the rotating bracket 20 through the second lower pin roll, and the other end of the nitrogen gas spring 33 is articulated with the movable plate 31 through the second upper pin roll.

Accordingly, the electric push rod 32 and the nitrogen gas spring 33 can be located above the movable plate 31; or the electric push rod 32 and the nitrogen gas spring 33 are located below the movable plate 31; or the electric push rod 32 and the nitrogen gas spring 33 are located to the left of the movable plate 31; or the electric push rod 32 and the nitrogen gas spring 33 are located to the right of the movable plate 31, etc., which is not specifically limited in the embodiments of the present invention. Correspondingly, there are multiple rotation directions of the movable plate 31 and the spray gun 4. For example, the rotation direction is perpendicular to the horizontal plane, parallel to the horizontal plane, and at a certain angle to the horizontal plane.

In the specific example shown in FIG. 24, the elastic telescopic component is the nitrogen gas spring 33. The first position is lower than the second position; the first position is a position where one end of the electric push rod 32 is articulated with the rotating bracket 20; the second position is a position where the other end of the electric push rod 32 is articulated with the movable plate 31. The third position is lower than the fourth position. The third position is a position where one end of the nitrogen gas spring 33 is articulated with the rotating bracket 20; the fourth position is a position where the other end of the nitrogen gas spring 33 is articulated with the movable plate 31.

The nitrogen gas spring 33 is in a compressed state, so that the elastic force of the nitrogen gas spring 33 can offset at least a part of the gravity of the spray gun 4, and the thrust provided by the nitrogen gas spring 33 is configured to offset at least a part of the gravity of the spray gun 4. Accordingly, when the two ends of the electric push rod 32 are stretched, the movable plate 31 and the spray gun 4 rotate upward, and the spray gun 4 unfolds until the spray gun 4 rotates to the preset position. For example, the location switch 35 and the sensor chip 36 trigger a sensing signal. The sensing signal controls the electric push rod 32 to stop rotating. When the two ends of the electric push rod 32 contract, the movable plate 31 and the spray gun 4 rotate downward, and the spray gun 4 is folded until the spray gun 4 is folded in place.

By stretching both ends of the electric push rod 32, the nitrogen gas spring 33 can be stretched with the stretching of the electric push rod 32; and during the stretching, the nitrogen gas spring 33 keeps putting output the thrust due to the compression of the nitrogen gas spring 33, the nitrogen gas spring 33 can bear a part of the gravity of the spray gun 4, thereby reducing the output power of the electric push rod 32.

In order to ensure that the spray gun 4 can move in place slowly and smoothly when unfolding, and the impact vibration when moving in place is reduced, optionally, as shown in FIG. 24, the spraying robot 100 further includes a limit device 34 which is provided on the rotating bracket 20.

Optionally, the limit device 34 includes an elastic abutment component which is located above the movable plate 31. When the electric push rod 32 acts on the movable plate 31, the movable plate 31 and the spray gun 4 can rotate upward, and the elastic abutment component abuts against the movable plate 31 at a target rotation position, to apply a downward elastic force on the movable plate 31. The target rotation position can be regarded a position where the movable plate 31 is located before rotating upward to the preset position in place.

In a specific example, as shown in FIGS. 24 and 26, the elastic abutment component includes a compression spring 41, a limit guide shaft 42, a guide external member 43 and a pressure plate 44.

Specifically, the guide external member 43 includes a cavity; the limit guide shaft 42 is sleeved in the cavity of the guide external member 43; the guide external member 43 and the limit guide shaft 42 are slidably connected; and the pressure plate 44 is provided at a top portion of the cavity of the guide external member 43.

One end of the compression spring 41 is connected to the guide external member 43, and the other end of the compression spring 41 is connected to the limit guide shaft 42. The end of the limit guide shaft 42 away from the guide external member 43 has an extension portion extending outward; one end of the compression spring 41 abuts against the guide external member 43, and the other end of the compression spring 41 abuts against the extension portion, so that when the limit guide shaft 42 moves toward the guide external member 43, the compression spring 41 can be compressed, accordingly the compression spring 41 provides a downward elastic force to the limit guide shaft 42.

In addition, the limit guide shaft 42 includes a first end 45 and a second end 46 that are away from each other. The first end 45 protrudes from the cavity of the guide external member 43 and faces the movable plate 31; and the first end 45 is configured to abut against the movable plate 31. The second end 46 is located in the cavity of the guide external member 43, and the pressure plate 44 is configured to abut against the second end 46.

When the two ends of the electric push rod 5 are stretched, and the movable plate 31 and the spray gun 4 rotate upward, the first end 45 of the limit guide shaft 42 abuts against the movable plate 31 at the target rotation position; and the compression spring 41 applies a downward elastic force on the movable plate 31 through the limit guide shaft 42. The two ends of the electric push rod 32 continue to stretch, the movable plate 31 makes the limit guide shaft 42 move toward the guide external member 43, and the compression spring 41 continues to be compressed until the second end 46 of the limit guide shaft 42 abuts against the pressure plate 44; then the limit guide shaft 42 stops moving, and the movable plate 31 and the spray gun 4 rotate in place.

In some embodiments of the present invention, the spraying robot 100 further includes a control device, a vision sensor 37, and a moving device 9. The control device is provided on the support body 1; and the control device is electrically connected to the first lifting mechanism 2 of the lifting mechanism and the spray gun 4, to control the elevating of the first lifting mechanism 2 of the lifting mechanism and the spraying of the spray gun 4. Specifically, when the spraying robot 100 operates, the control device controls the movement of the first lifting mechanism 2 in the lifting channel 12; and the spray gun 4 moves with the first lifting mechanism 2 in a direction in which the lifting channel 12 extends, so that the spray gun 4 is lifted with the first lifting mechanism 2.

The vision sensor 37 is provided on the support body 1 and is configured to acquire a distance between the position of the support body 1 and an obstacle; and the control device is electrically connected to the vision sensor 37 to determine house type information of the space where the support body 1 is located through the distance detected by the vision sensor 37. Specifically, before the spraying operation of the spraying robot 100, the vision sensor 37 provided on the support body 1 acquires the distance information between the support body 1 and an obstacle in each direction in the house type of the space where the support body 1 is located, and then transmits the acquired information to the control device, such that the spraying robot 100 can determine structure information of the house type of the space where the support body 1 is located.

The moving device 9 is provided at the bottom portion of the support body 1, and the control device is electrically connected to the moving assembly and the moving device 9 to control the movements of the moving assembly and the moving device 9 according to a spraying path corresponding to the house type information. Accordingly, after determining the house type information of the space where the support body 1 is located, the control device controls the moving device 9 to move along the spraying path according to the spraying path set to match the house type to perform the spraying operation, so that the spraying robot 100 can autonomously identify the house type information, and perform the spraying operation on the spraying path matching the house type information, to implement the automatic operation of the spraying robot 100, reduce manual intervention and save labor costs.

It should be noted that the vision sensor 37 has two functions. On the one hand, the vision sensor 37 acquires the information of the distance between the support body 1 and the obstacle in each direction, and obtains basic information such as the length, width, and height of the space in which the support body 1 is located, and then determine the information of the house type of the space where the support body 1 is located. On the other hand, when the spraying robot 100 operates, the distance between the support body 1 and an operated wall can be acquired by the vision sensor 37, so that the control device can control the moving device 9 to move the spraying robot 100 according to the acquired information of the distance between the support body 1 and the operated wall, thereby adjusting the distance between the support body 1 and the operated wall, so that the spraying robot 100 is kept at an appropriate distance from the operated wall at all time during the operation, to improve the quality of the spraying.

There may be a plurality of vision sensors 37. By providing the vision sensors 37 around and on the top of the support body 1, more detailed and accurate house type information can be acquired to reduce the determination error of the house type structure. Meanwhile, the vision sensor 37 can also be provided on the spray gun 4 to acquire the distance between the spray gun 4 and the sprayed wall, so that when the spraying robot 100 operates, the control device controls the spray gun 4 to keep an appropriate distance from the sprayed wall according to the acquired distance between the spray gun 4 and the wall, to improve the quality of the spraying. The plurality here refers to two or more than two, and there is no specific limitation here.

In some embodiments of the present invention, the spraying robot 100 further includes a memory which is electrically connected to the control device and pre-stores a plurality of house type images and spraying paths each of which corresponds to each house type image, so that the control device can determine the house type image stored in the memory according to the house type information, and determine the corresponding spraying path according to the house type image.

Therefore, after determining the house type image, the spraying robot 100 can determine the spraying path thereof, so that the spraying robot 100 can acquire the distance between the support body 1 and an obstacle by the vision sensor 37 during the spraying operation, and determine different house type information, and determine a house type image corresponding to different house type information according to the plurality of house type images pre-stored in the memory, and determine the spraying path corresponding to the house type image according to the determined house type image, so that the spraying robot 100 can perform the corresponding spraying path according to different house type, thereby improving the application range of the spraying robot 100 and facilitates the spraying operation.

It should be appreciated that the more the number of the house type images and the number of the spraying paths corresponding to the house type images stored in the memory, the wider the application range of the spraying robot 100; furthermore, the increase the number of the house type images and the number of the spraying paths corresponding to the house type images in the memory can increase the application range of the spraying robot 100; meanwhile, when new house type images and spraying paths corresponding to the new house type images are continuously added in the memory, the spraying robot 100 can be adapted to the ever-changing market, and the adaptability of the spraying robot 100 can be improved.

In an embodiment, the vision sensor 37 can include: a lidar sensor, an infrared sensor, and/or an ultrasonic sensor, that is, the vision sensor 37 can be at least one of a lidar sensor, an infrared sensor, and an ultrasonic sensor, so that the spraying robot 100 can be adapted to different operating environments.

Specifically, when the vision sensor 37 includes a lidar sensor, the lidar sensor emits a laser beam when operates; and when laser beam encounters an obstacle such as a wall, the wall causes the reflection of the laser beam. When the lidar sensor receives the reflected light, the distance to the obstacle is determined by measuring travel time of the reflected light, to accurately measure the distance between the spraying robot 100 and the obstacle such as a wall, so that the spraying robot 100 can acquire more accurate house type information.

In an example, the vision sensor 37 is an ultrasonic radar. The ultrasonic radar emits high-frequency mechanical waves. When an obstacle is encountered, part of the mechanical waves is reflected. The ultrasonic sensor measures the travel time of the reflected mechanical wave to determine the distance to the obstacle. The ultrasonic sensor has good directionality and can be configured to detect a material level of the spraying robot 100, in order to prevent the spraying robot 100 from colliding with the obstacle.

In another example, the vision sensor 37 is an infrared sensor. The infrared sensor can sense the temperature of the obstacle such as a wall. When the temperature of the obstacle such as the wall is too low, the control device can interrupt the operation of the spraying robot 100 to avoid freezing of the paint due to too low temperature of the wall surface in the spraying process, which affects the quality of the operating.

The present invention further provides a control method for the spraying robot 100 in the above-mentioned embodiments.

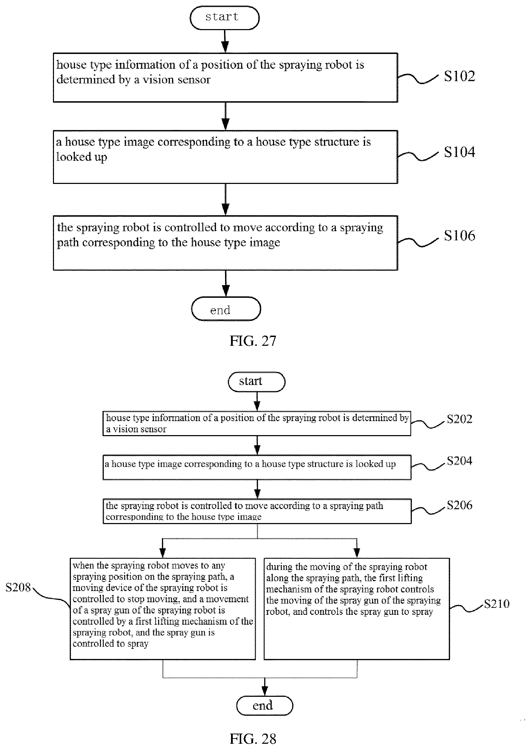

For example, as shown in FIG. 27, the control method according to the embodiment of the present invention includes: step S 102: house type information of a position of the spraying robot 100 is determined by a vision sensor 37; step S104: a house type image corresponding to a house type structure is looked up; step S 106: the spraying robot 100 is controlled to move according to a spraying path corresponding to the house type image.

Specifically, the spraying robot 100 first acquires the house structure information of the position of the spraying robot 100 through the vision sensor 37, and compares with the house type images pre-stored in the memory to determine a house type image corresponding to the current house type structure of the spraying robot 100, and then the control device controls the spraying robot 100 to move according to the spraying path corresponding to the determined house type image, so that the spraying robot 100 autonomously plans a spraying route according to the real-time information acquired by the vision sensor 37, thereby omitting manual operations, saving labor costs, and improving operation efficiency.

As shown in FIG. 28, the control method for the spraying robot 100 according to an embodiment of the present invention specifically includes the following steps.

Step S202: house type information of a position of the spraying robot 100 is determined by a vision sensor 37.

Step S204: a house type image corresponding to a house type structure is looked up.

Step S206: the spraying robot 100 is controlled to move according to a spraying path corresponding to the house type image.

Step S208: when the spraying robot 100 moves to any spraying position on the spraying path, a moving device 9 of the spraying robot 100 is controlled to stop moving, and a movement of a spray gun 4 of the spraying robot 100 is controlled by a first lifting mechanism 2 of the spraying robot 100, and the spray gun 4 is controlled to spray.

Step S210: during the moving of the spraying robot 100 along the spraying path, the first lifting mechanism 2 of the spraying robot 100 controls the moving of the spray gun 4 of the spraying robot 100, and controls the spray gun 4 to spray.

Specifically, when the spraying robot 100 operates, and when the spraying robot 100 moves to any spraying position on the spraying path, the moving device 9 of the spraying robot 100 is controlled to stop moving, so that the spraying robot 100 can stop at any position on the spraying path according to the spraying requirements, and can control the spray gun 4 of the spraying robot 100 to move through the first lifting mechanism 2 of the spraying robot 100 according to the spraying requirements, and control the spray gun 4 to spray. When the spraying robot 100 stops moving, since the support body 1 is stationary relative to the ground, the spraying robot 100 has a higher stability, accordingly the spraying robot 100 is more stable during the spraying operation of the spray gun 4, and the accuracy of the spraying operation is improved. In addition, during the moving of the spraying robot 100 along the spraying path, the first lifting mechanism 2 of the spraying robot 100 can control the spray gun 4 of the spraying robot 100 to move and control the spray gun 4 to spray, so that the spraying robot 100 performs the spraying operation while moving, to improve the efficiency of the spraying operation.

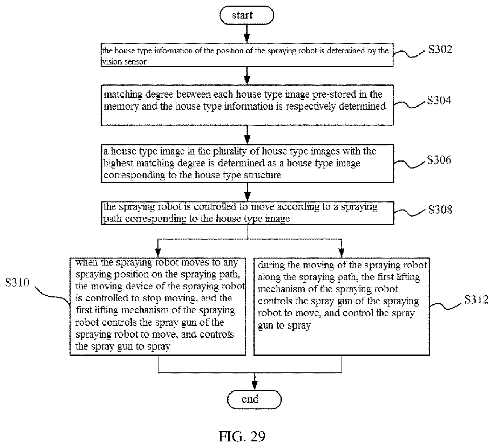

As shown in FIG. 29, a control method for a spraying robot 100 according to an embodiment of the present invention specifically includes the following steps.

Step S302: the house type information of the position of the spraying robot 100 is determined by the vision sensor 37.

Step S304: matching degree between each house type image pre-stored in the memory and the house type information is respectively determined.

Step S306: a house type image in the plurality of house type images with the highest matching degree is determined as a house type image corresponding to the house type structure.

Step S308: the spraying robot 100 is controlled to move according to a spraying path corresponding to the house type image.

Step S310: when the spraying robot 100 moves to any spraying position on the spraying path, the moving device 9 of the spraying robot 100 is controlled to stop moving, and the first lifting mechanism 2 of the spraying robot 100 controls the spray gun 4 of the spraying robot 100 to move, and controls the spray gun 4 to spray.

Step S312: during the moving of the spraying robot 100 along the spraying path, the first lifting mechanism 2 of the spraying robot 100 controls the spray gun 4 of the spraying robot 100 to move, and control the spray gun 4 to spray.

Specifically, after the vision sensor 37 acquires the house type structure information, the matching degree between each house type image in the memory and the house type structure information is first determined, and then the house type image having the highest matching degree with the house type structure information is selected according to the matching degree between each house type image and the house type structure information as the house type image corresponding to the house type information, thereby providing a more accurate spraying path for the spraying operation.

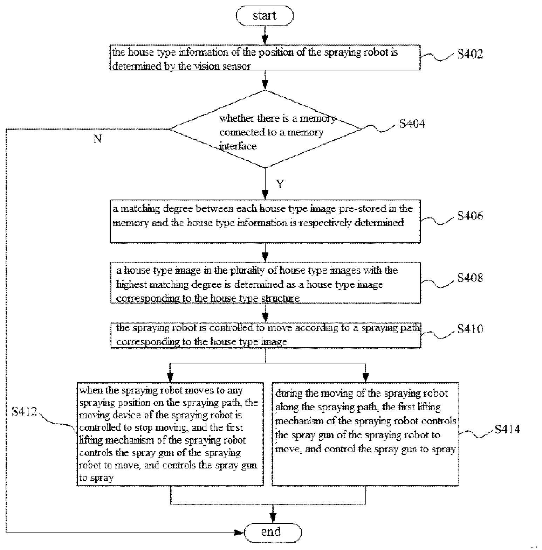

As shown in FIG. 30, a control method for a spraying robot 100 according to an embodiment of the present invention specifically includes the following steps.

Step S402: the house type information of the position of the spraying robot 100 is determined by the vision sensor 37.

Step S404: it is determined whether there is a memory connected to a memory interface, if there is a memory connected to a memory interface, step S406 is performed, otherwise the process ends.

Step S406: a matching degree between each house type image pre-stored in the memory and the house type information is respectively determined.

Step S408: a house type image in the plurality of house type images with the highest matching degree is determined as a house type image corresponding to the house type structure.

Step S410: the spraying robot 100 is controlled to move according to a spraying path corresponding to the house type image.

Step S412: when the spraying robot 100 moves to any spraying position on the spraying path, the moving device 9 of the spraying robot 100 is controlled to stop moving, and the first lifting mechanism 2 of the spraying robot 100 controls the spray gun 4 of the spraying robot 100 to move, and controls the spray gun 4 to spray.

Step S414: during the moving of the spraying robot 100 along the spraying path, the first lifting mechanism 2 of the spraying robot 100 controls the spray gun 4 of the spraying robot 100 to move, and control the spray gun 4 to spray.

Specifically, before the matching degree between each house type image stored in the external memory and the house type information is respectively determined, the use state of the memory interface is determined first, and whether there is a memory connected to the memory interface is determined; when there is a memory connected to the memory interface, the step of respectively determining the matching degree between each house type image stored in the external memory and the house type information is performed, to avoid errors in the spraying program when there is no memory connected to the memory interface, causing the spraying robot 100 to operate illegally and perform an incorrect spraying path, resulting in damage to the spraying robot 100 due to the collision or damage to the operating surface.

The present invention further provides a computer-readable storage medium for the control method for the spraying robot 100 in the above-mentioned embodiments.

The computer-readable storage medium according to an embodiment of the present invention, on which a computer program is stored and is configured to implement the steps of any one of the above-mentioned control methods when the computer program is executed by a processor, thereby having all the above-mentioned advantages, the details are not repeated here.

The spraying robot 100 according to a specific embodiment of the present invention can perform full-automatic spraying.

The spraying robot 100 in the present invention includes an automatic spraying system, a robot walking and route planning system, a two-stage first lifting mechanism 2, etc., which can implement the spraying on the walls and ceiling, and the detection of the quality of the spraying quality, and can acquire the house type information of the position of the spraying robot, and can determine the spraying path matching the house type information; and accordingly the spraying robot 100 automatically performs the spraying operation along the spraying path.

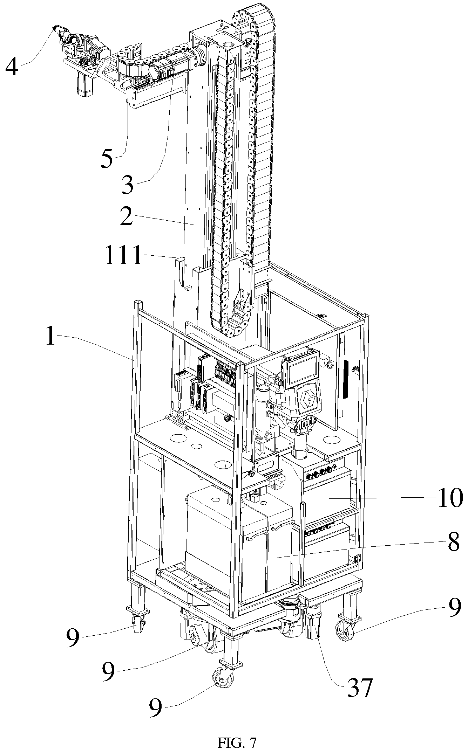

As shown in FIG. 7, specifically, when the spraying robot 100 autonomously sprays, the vision sensor 37 first determines the house type information of the position of the spraying robot 100, and then the control device determines whether there is a memory connected to the memory interface. If there is a memory connected to the memory interface, the matching degree between each house type image stored in the memory and the house type information is respectively determined, and then the house type image in the plurality of house type images with the highest matching degree is determined as the house type image corresponding to the house type structure, and the spraying robot 100 is controlled to move according to the spraying path corresponding to the house type image; and the spraying robot 100 can stop moving at any position on the spraying path and perform the spraying operation according to specific requirements; or during the moving of the spraying robot 100 along the spraying path, the spraying robot 100 can control the spray gun 4 to spray while moving to meet different spraying requirements.

The spray gun 4 of the automatic spraying system has two degrees of freedom, which can implement the rotation of 360° in horizontal and vertical directions. In addition, the spraying system has an extension arm, which can be combined with the rotation of the spray head to implement the spraying on special-shaped walls such as bay windows. The extension arm mechanism of the spray gun 4 is provided with a folding and rotating mechanism, which is convenient for the device to enter and exit the elevator, a room door and other narrow space areas.

Other configurations and operations of the spraying robot 100 according to the embodiments of the present invention are known to those of ordinary skill in the art, and will not be described in detail here.

In the description of this specification, the description with reference to the terms "some embodiments", "optionally", "further" or "some examples", etc., mean specific features, structures, materials, or materials described in conjunction with the embodiments or examples is included in at least one embodiment or example of the invention. In this specification, the schematic expression of the above-mentioned terms does not definitely refer to the same embodiment or example. Moreover, the described specific features, structures, materials or characteristics can be combined in any one or more embodiments or examples in a suitable manner.

Although the embodiments of the present invention have been shown and described, those of ordinary skill in the art can understand that various variations, modifications, substitutions, and modifications can be made to these embodiments without departing from the principle and purpose of the present invention. The scope of the invention is defined by the claims and their equivalents.

## Claims

1. A spraying robot, comprising:
a support body, a lifting channel being provided in the support body;
a first lifting mechanism, provided in the lifting channel, a first portion of the first lifting mechanism being fixedly connected to the support body;
a lifting motor, being in transmission connection with the first lifting mechanism to move the first lifting mechanism in the lifting channel under driving of the lifting motor;
a spray gun, provided on a second portion of the first lifting mechanism, wherein the first portion and the second portion are respectively provided on both sides of the first lifting mechanism to make the first lifting mechanism extend from or retract into the lifting channel under the driving of the lifting motor, and the spray gun moves relative to the first lifting mechanism.

2. The spraying robot according to claim 1, wherein the first lifting mechanism comprises:
at least two transmission wheels, one of the at least two transmission wheels is in transmission connection with the lifting motor;
a transmission belt, wound around the transmission wheel in transmission connection with the lifting motor, wherein the transmission belt is matched with the at least two transmission wheels to move under the driving of the lifting motor.

3. The spraying robot according to claim 2, wherein one side of the support body is provided with a fixed plate extending upward and parallel to a direction of the lifting channel, a first portion of the transmission belt is fixedly connected to the fixed plate, the spray gun is provided on a second portion on a side of the transmission belt away from the fixed plate.

4. The spraying robot according to claim 3, wherein,
the transmission wheel is a gear, and the transmission belt is a rack; or
the transmission wheel is a belt wheel, and the transmission belt is a synchronous belt; or
the transmission wheel is a chain wheel, and the transmission belt is a chain belt.

5. The spraying robot according to claim 1, further comprising:
a hanger, provided on the second portion of the first lifting mechanism, and provided with a first sliding assembly, the spray gun being provided on the first sliding assembly to slide under an action of the first sliding assembly.

6. The spraying robot according to claim 5, wherein the first sliding assembly comprises:
a first guide rail, fixedly connected to the hanger;
a first guide block, provided in the first guide rail, and provided with the spray gun;
a sliding motor, electrically connected to the first guide block to control the first guide block to slide on the first guide rail.

7. The spraying robot according to claim 5, further comprising:
a rotating assembly, provided on the first sliding assembly, the spray gun being provided on the rotating assembly to rotate within an operating surface of the spray gun under the action of the rotating assembly.

8. The spraying robot according to claim 1, further comprising:
a second lifting mechanism, provided on the support body, the second lifting mechanism being capable of moving relative to the support body;
wherein, the second lifting mechanism is provided with the lifting channel.

9. The spraying robot according to claim 8, wherein the second lifting mechanism comprises:
a second guide rail and a second guide block slidably connected to each other, wherein the second guide block is provided with the lifting channel.

10. The spraying robot according to claim 1, further comprising:
a material barrel, provided within the support body, wherein a communicating conveying pipeline is provided between the spray gun and the material barrel; and/or
a moving device, provided at a bottom portion of the support body to drive the support body to move; and/or
a power supply device, provided within the support body to provide an electrical energy when the spraying robot operates.

11. The spraying robot according to claim 3, wherein,
the transmission belt is provided with a first matching portion fixedly connected to the support body, and the first lifting mechanism moves relative to the support body through the first matching portion under driving of the lifting motor.

12. The spraying robot according to claim 11, wherein the first matching portion is provided on a side of the transmission belt, the spray gun of the spraying robot is provided on the other side of the transmission belt to move on the transmission belt under the driving of the lifting motor, and the first lifting mechanism moves relative to the support body.

13. The spraying robot according to claim 11, further comprising:
a second matching portion provided on the support body, at least a part of the transmission belt is provided in the second matching portion, to fixedly connect the transmission belt with the support body through matching of the first matching portion and the second matching portion.

14. The spraying robot according to claim 13, wherein one of the first matching portion and the second matching portion is a tooth groove adapted to a shape of a wheel tooth of the transmission wheel, and the other is a convex tooth with a same shape as the wheel tooth, to fixedly connect the transmission belt with the support body through matching of the tooth groove and the convex tooth; or the second matching portion is provided with a tooth-shape block protruding toward the transmission belt to fix the first matching portion through the tooth-shape block.

15. The spraying robot according to claim 3, wherein the first lifting mechanism further comprises:
an elevating support slidably connected to the support body in a height direction;
wherein, the transmission wheel in transmission connection with the lifting motor is a driving wheel, and the driving wheel is mounted at one end of the elevating support in the height direction;
the other transmission wheel is a driven wheel, and the driven wheel is mounted at the other end of the elevating support in the height direction;
the transmission belt is wound around peripheries of the driving wheel and the driven wheel, the first portion of the transmission belt is located on a side of a central connection line of the driving wheel and the driven wheel, and the second portion of the transmission belt is located on the other side of the central connection line of the driving wheel and the driven wheel, the first portion is fixedly connected to the support body, and the second portion is configured to mount the spray gun; when the spray gun is at the highest operating position, the second portion is located at an upper portion of the first lifting mechanism, and the first portion is located at a lower portion of the first lifting mechanism.

16. The spraying robot according to claim 15, further comprising a first connector and a second connector, one end of the first connector is fixedly connected to the second portion, and the other end of the first connector is connected to the spray gun, one end of the second connector is fixedly connected to the first portion, and the other end of the second connector is connected to the support body.

17. The spraying robot according to claim 16, wherein the first connector comprises:
a connector main board, one side of the connector main board being connected to the second portion, and the other side of the connector main board being connected to the spray gun;
a connector side plate, both ends of the connector main board being provided with the connector side plate, and two connector side plates being respectively slidably connected to the elevating support.

18. The spraying robot according to claim 16, wherein the elevating support includes two vertical walls and two reinforcing walls, upper ends of the two vertical walls are connected by the reinforcing wall and lower ends of the two vertical walls are connected by the reinforcing wall, two sides of the two vertical walls adjacent to each other in a horizontal direction are respectively provided with relief openings, the first connector passes through one relief opening, and the second connector passes through the other relief opening.

19. The spraying robot according to claim 15, wherein the first lifting mechanism further comprises a first upper limit member and a first lower limit member, the first upper limit member is provided on an upper portion of the elevating support and is configured to limit a high position of the second portion, the first lower limit member is provided at a lower portion of the elevating support and is configured to limit a low position of the second portion;
and/or, the first lifting mechanism further comprises a second upper limit member and a second lower limit member, the second upper limit member is provided on the upper portion of the support body and is configured to limit the high position of the elevating support, the second lower limit member is provided on the lower portion of the support body and is configured to limit the low position of the elevating support.

20. The spraying robot according to claim 18, wherein second slide rails are provided on inner sides of both side walls of the support body, and second sliding blocks are provided on outer sides of the vertical walls on both sides of the elevating support, the second sliding blocks are located at the lower portion of the elevating support, and each second sliding block is slidably connected to each second slide rail.

21. The spraying robot according to any one of claims 1 to 20, further comprising:
a rotating assembly provided on the support body, the rotating assembly comprising a first rotating structure and a second rotating structure, the first rotating structure being provided on the support body, and the second rotating structure being provided on the first rotating structure, the second rotating structure and the first rotating structure rotating in different directions;
wherein the spray gun is provided on the second rotating structure to rotate under the driving of the rotating assembly.

22. The spraying robot according to claim 21, wherein a rotating platform is provided at one end of the support body, and the first rotating structure comprises:
a first rotating base, provided on the rotating platform;
a first rotating body, provided coaxially with the first rotating base, and the first rotating body being capable of rotating on the first rotating base;
a first rotating motor, being in transmission connection with the first rotating body to rotate the first rotating body.

23. The spraying robot according to claim 22, wherein the second rotating structure comprises:
a second rotating base, provided on the first rotating body;
a second rotating body, provided coaxially with the second rotating base, and the second rotating body being capable of rotating on the second rotating base, and the spray gun being provided on the second rotating body;
a second rotating motor, being in transmission connection with the second rotating body to rotate the second rotating body.

24. The spraying robot according to claim 22, wherein the first rotating body comprises a first plate and a second plate connected to a side of the first plate,
wherein the first plate is at a preset angle to the second plate, and the second rotating motor is provided in a space sandwiched by the first plate and the second plate.

25. The spraying robot according to claim 23, further comprising:
a right-angle speed reducer, one end of the right-angle speed reducer being connected to the second rotating motor, and the other end being connected to the second rotating body, to enable a right angle between an axis of the second rotating motor and an axis of the second rotating base.

26. The spraying robot according to claim 21, wherein a rotating surface of the first rotating structure is perpendicular to a rotating surface of the second rotating structure.

27. The spraying robot according to claim 22, further comprising:
a rotating bracket, one end of the rotating bracket being connected to the support body, a wire passing space being provided within the rotating bracket, and the first rotating base being provided on the rotating bracket.

28. The spraying robot according to claim 21, further comprising:
a second sliding assembly provided on the support body, and the first rotating structure being provided on the second sliding assembly.

29. The spraying robot according to claim 28, wherein the second sliding assembly comprises:
a lead screw provided on the support body;
a bracket sliding block provided with threads matched with the lead screw, wherein when the lead screw is driven by the sliding motor to rotate, the bracket sliding block is capable of moving along an axial direction of the lead screw, and the bracket sliding block is provided with the rotating assembly.

30. The spraying robot according to claim 27, further comprising:
a movable plate articulated with the rotating bracket, the spray gun being fixedly connected to the movable plate, and the spray gun being configured to perform a spraying operation;
an electric push rod, one end of the electric push rod being articulated with the rotating bracket, the other end of the electric push rod being articulated with the movable plate, and both ends of the electric push rod being capable of performing a telescopic movement.

31. The spraying robot according to claim 30, wherein,
the spraying robot further comprises an elastic telescopic component, one end of the elastic telescopic component is articulated with the rotating bracket, and the other end of the elastic telescopic component is articulated with the movable plate;
an elastic force of the elastic telescopic component is configured to offset at least a part of a gravity of the spray gun.

32. The spraying robot according to claim 31, wherein,
a number of the elastic telescopic components is two;
two elastic telescopic components are respectively located on both sides of a rotating surface, and the rotating surface is a plane where the electric push rod is located when rotating.

33. The spraying robot according to claim 31, wherein,
the elastic telescopic component is a nitrogen gas spring;
a first position is lower than a second position, the first position is a position where one end of the electric push rod is articulated with the rotating bracket, and the second position is a position where the other end of the electric push rod is articulated with the movable plate;
a third position is lower than a fourth position, the third position is a position where one end of the nitrogen gas spring is articulated with the rotating bracket, and the fourth position is a position where the other end of the nitrogen gas spring is articulated with the movable plate;
the nitrogen gas spring is in a compressed state, and a thrust provided by the nitrogen gas spring is configured to offset at least a part of the gravity of the spray gun.

34. The spraying robot according to claim 33, wherein,
the spraying robot further comprises a limit device, the limit device is provided on the rotating bracket;
the limit device comprises an elastic abutment component, and the elastic abutment component is located above the movable plate;
when the electric push rod acts on the movable plate to rotate the movable plate and the spray gun upward, the elastic abutment component abuts against the movable plate at a target rotation position, to apply a downward elastic force on the movable plate;
the target rotation position is a position where the movable plate is located before the movable plate rotates upward to a preset position in place.

35. The spraying robot according to claim 30, wherein,
the spraying robot further comprises a location switch and a sensing chip, the location switch is provided on the rotating bracket, and the sensing chip is provided on the movable plate;
when the movable plate and the spray gun rotate to preset positions in place under the thrust of the electric push rod, the location switch and the sensing chip trigger a sensing signal.

36. The spraying robot according to any one of claims 1 to 35, further comprising:
a control device, provided on the support body and electrically connected to the first lifting mechanism and the spray gun to control elevating of the first lifting mechanism and spraying of the spray gun;
a vision sensor, provided on the support body and configured to acquire a distance between a position of the support body and an obstacle, and the control device being electrically connected to the vision sensor to determine house type information of a space where the support body is located through the distance detected by the vision sensor;
a moving device, provided at a bottom portion of the support body, and the control device being electrically connected to the moving device to control the moving device to move according to a spraying path corresponding to the house type information.

37. The spraying robot according to claim 36, further comprising:
a memory electrically connected to the control device, and pre-storing a plurality of house type images and spraying paths each of which corresponds to each house type image, so that the control device determines a house type image stored in the memory according to the house type information and determines a corresponding spraying path according to the house type image.

38. The spraying robot according to claim 36, wherein the vision sensor specifically comprises at least one of:
a lidar sensor, an infrared sensor, and an ultrasonic sensor.

39. A control method for the spraying robot according to any one of claims 36 to 38, comprising:
determining house type information of a position of the spraying robot by a vision sensor of the spraying robot;
looking up a house type image corresponding to a house type structure;
controlling the spraying robot to move according to a spraying path corresponding to the house type image.

40. The control method according to claim 39, further comprising:
when the spraying robot moves to any spraying position on the spraying path, controlling a moving device of the spraying robot to stop moving, and controlling, by a first lifting mechanism of the spraying robot, a spray gun of the spraying robot to move, and controlling the spray gun to spray; or
during a movement of the spraying robot along the spraying path, controlling, by the first lifting mechanism of the spraying robot, the spray gun of the spraying robot to move, and controlling the spray gun to spray.

41. The control method according to claim 39, wherein the looking up the house type image corresponding to the house type structure specifically comprises:
respectively determining a matching degree between each house type image pre-stored in the memory and the house type information;
determining a house type image in the plurality of house type images with the highest matching degree as the house type image corresponding to the house type structure.

42. The control method according to claim 41, further comprising:
before respectively determining the matching degree between each house type image pre-stored in the memory and the house type information,
determining a usage state of a memory interface;
determining whether there is a memory connected to the memory interface, and generating a determination result;
if the determination result is yes, performing the step of respectively determining the matching degree between each house type image stored in an external memory and the house type information.

43. A computer-readable storage medium, on which a computer program is stored, wherein steps of the control method according to any one of claims 39 to 42 is performed when the computer program is executed by a processor.
